# EUROPEAN PATENT APPLICATION

(11) **EP 4 274 132 A1**
(43) Date of publication of application: **08.11.2023**
(21) Application number: 21912432.8
(22) Date of filing: 04.01.2021
(51) Int. Cl.: H04L 1/18, H04W 72/04

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Mewburn Ellis LLP
(86) International application number: PCT/CN2021/070192
(87) International publication number: WO 2022/141649

(57) **Abstract**

Implementations of the disclosure provide a wireless communication method and a device. The method includes the following. A first device receives first control information transmitted by a second device, where the first control information is for scheduling transmission of S physical channels, at least one physical channel among the S physical channels corresponds to a first hybrid automatic repeat request (HARQ)-acknowledgment (ACK) codebook, the first HARQ-ACK codebook corresponds to a first feedback resource, the first control information corresponds to a first control information format, a maximum number of transmissions of physical channels scheduled by the first control information format is M, M is a positive integer greater than or equal to 2, and S is a positive integer greater than or equal to 1 and less than or equal to M. The first device transmits the first HARQ-ACK codebook on the first feedback resource. The first control information format corresponding to the first control information is structured such that the maximum number of scheduled transmissions of physical channels is M, which improves the PDSCH scheduling manner and improves system performance. Especially for the high-frequency system, the capability requirements for the terminal device can be reduced.

## Description

### TECHNICAL FIELD

Implementations of the disclosure relate to the field of communication, and more particularly, to a wireless communication method and a device.

### BACKGROUND

In high-frequency systems, each slot occupies a shorter duration due to a larger subcarrier spacing (SCS). If the physical downlink shared channel (PDSCH) is still scheduled on a per slot basis as in low-frequency systems, the terminal device needs to detect the physical downlink control channel (PDCCH) in each slot, which requires the terminal device to have strong processing capabilities.

Therefore, it is necessary in the art to improve the PDSCH scheduling manner for the high-frequency system to improve system performance.

### SUMMARY

Implementations of the disclosure provide a wireless communication method and a device, with which the physical downlink shared channel (PDSCH) scheduling manner for the high-frequency system is improved, thereby improving system performance.

In a first aspect, a wireless communication method is provided. The method includes the following. A first device receives first control information transmitted by a second device, where the first control information is for scheduling transmission of S physical channels, at least one physical channel among the S physical channels corresponds to a first hybrid automatic repeat request (HARQ)-acknowledgment (ACK) codebook, the first HARQ-ACK codebook corresponds to a first feedback resource, the first control information corresponds to a first control information format, a maximum number of transmissions of physical channels scheduled by the first control information format is M, M is a positive integer greater than or equal to 2, and S is a positive integer greater than or equal to 1 and less than or equal to M. The first device transmits the first HARQ-ACK codebook on the first feedback resource.

In a second aspect, a wireless communication method is provided. The method includes the following. A second device transmits first control information to a first device, where the first control information is for scheduling transmission of S physical channels, at least one physical channel among the S physical channels corresponds to a first HARQ-ACK codebook, the first HARQ-ACK codebook corresponds to a first feedback resource, the first control information corresponds to a first control information format, a maximum number of transmissions of physical channels scheduled by the first control information format is M, M is a positive integer greater than or equal to 2, and S is a positive integer greater than or equal to 1 and less than or equal to M. The first device receives the first HARQ-ACK codebook on the first feedback resource.

In a third aspect, a first device is provided. The first device is configured to perform the method in the first aspect or implementations thereof. Specifically, the terminal device includes a functional module configured to perform the method in the first aspect or implementations thereof.

In a fourth aspect, a second device is provided. The second device is configured to perform the method in the second aspect or implementations thereof. Specifically, the network device includes a functional module configured to perform the method in the second aspect or implementations thereof.

In a fifth aspect, a first device is provided. The first device includes a processor and a memory. The memory is configured to store computer programs. The processor is configured to invoke and execute the computer programs stored in the memory to perform the method in the first aspect or implementations thereof.

In a sixth aspect, a second device is provided. The second device includes a processor and a memory. The memory is configured to store computer programs. The processor is configured to invoke and execute the computer programs stored in the memory to perform the method in the second aspect or implementations thereof.

In a seventh aspect, a chip is provided. The chip is configured to perform the method in any of the first to the second aspects or implementations thereof. Specifically, the chip includes a processor. The processor is configured to invoke and execute computer programs stored in a memory, to cause a device equipped with the chip to perform the method in any of the first to the second aspects or implementations thereof.

In an eighth aspect, a computer-readable storage medium is provided. The computer-readable storage medium is configured to store computer programs. The computer programs are operable with a computer to perform the method in any of the first to the second aspects or implementations thereof.

In a ninth aspect, a computer program product is provided. The computer program product includes computer program instructions operable with a computer to perform the method in any of the first to the second aspects or implementations thereof.

In a tenth aspect, a computer program is provided. When running on a computer, the computer program causes the computer to perform the method in any of the first to the second aspects or implementations thereof.

Based on the technical solutions above, the first control information format corresponding to the first control information is structured such that the maximum number of scheduled transmissions of physical channels is M, which improves the PDSCH scheduling manner and improves system performance. Especially for the high-frequency system, the capability requirements for the terminal device can be reduced. In addition, since the first control information is for scheduling transmission of S physical channels, at least one physical channel among the S physical channels is mapped to the first HARQ-ACK codebook, and then the first HARQ-ACK codebook is transmitted over the first feedback resource, which ensures that the first device performs HARQ-ACK feedback on the physical channel scheduled by the first control information, thereby ensuring communication quality.

### BRIEF DESCRIPTION OF THE DRAWINGS

FIG. 1 illustrates an example of a communication system architecture applied in implementations of the disclosure.
FIG. 2 illustrates an example of C-DAI information in the case of Type-2 HARQ-ACK codebook feedback provided in implementations of the disclosure.
FIG. 3 illustrates an example of scheduling multiple physical channels by one control information provided in implementations of the disclosure.
FIG. 4 is a schematic flowchart of a wireless communication method provided in implementations of the disclosure.
FIG. 5 illustrates an example of physical channels scheduled by multiple control information in a single-carrier scenario provided in implementations of the disclosure.
FIG. 6 illustrates an example of physical channels scheduled by multiple control information in a multi-carrier scenario provided in implementations of the disclosure.
FIG. 7 is a schematic block diagram of a first device provided in implementations of the disclosure.
FIG. 8 is a schematic block diagram of a second device provided in implementations of the disclosure.
FIG. 9 is a schematic block diagram of a communication device provided in implementations of the disclosure.
FIG. 10 is a schematic block diagram of a chip provided in implementations of the disclosure.

### DETAILED DESCRIPTION

The following will describe technical solutions of implementations of the disclosure with reference to the accompanying drawings. Apparently, implementations described herein are merely some implementations, rather than all implementations, of the disclosure. For the implementations described herein, all other implementations obtained by those of ordinary skill in the art without creative effort shall fall within the protection scope of the disclosure.

The technical solutions of implementations of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, or vehicle to everything (V2X) communication. Implementations of the disclosure can also be applied to these communication systems.

Optionally, a communication system of implementations of the disclosure may be applied to a carrier aggregation (CA) scenario, a dual connectivity (DC) scenario, or a standalone (SA) network deployment scenario.

Optionally, the communication system of implementations of the disclosure may be applied to an unlicensed spectrum or a licensed spectrum, where the unlicensed spectrum may also be referred to as a shared spectrum, and the licensed spectrum may also be referred to as a non-shared spectrum.

Implementations of the disclosure have been described in connection with the network device and the terminal device. The terminal device may also be referred to as a user equipment (LTE), an access terminal, a subscriber unit, a subscriber station, a mobile station, a remote station, a remote terminal, a mobile device, a user terminal, a terminal, a wireless communication device, a user agent, or a user device.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

In implementations of the disclosure, the terminal device may be deployed on land, for example, deployed indoors or outdoors, and may be handheld, wearable, or vehicle-mounted. The terminal device may also be deployed on water, for example, on a ship, etc. The terminal device may also be deployed in the air, for example, on an airplane, an air balloon, a satellite, etc.

In implementations of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

By way of explanation rather than limitation, according to implementations of the disclosure, the terminal device may also be a wearable device. The wearable device may also be called a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In implementations of the disclosure, the network device may be a device configured to communicate with a mobile device, and the network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a network device or a g-Node B (gNB) in the NR network, a network device in the future evolved PLMN, a network device in a NTN, etc.

By way of example rather than limitation, in implementations of the disclosure, the network device may be of mobility. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In implementations of the disclosure, the network device can provide services for a cell, and the terminal device communicates with the network device through a transmission resource (for example, a frequency-domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

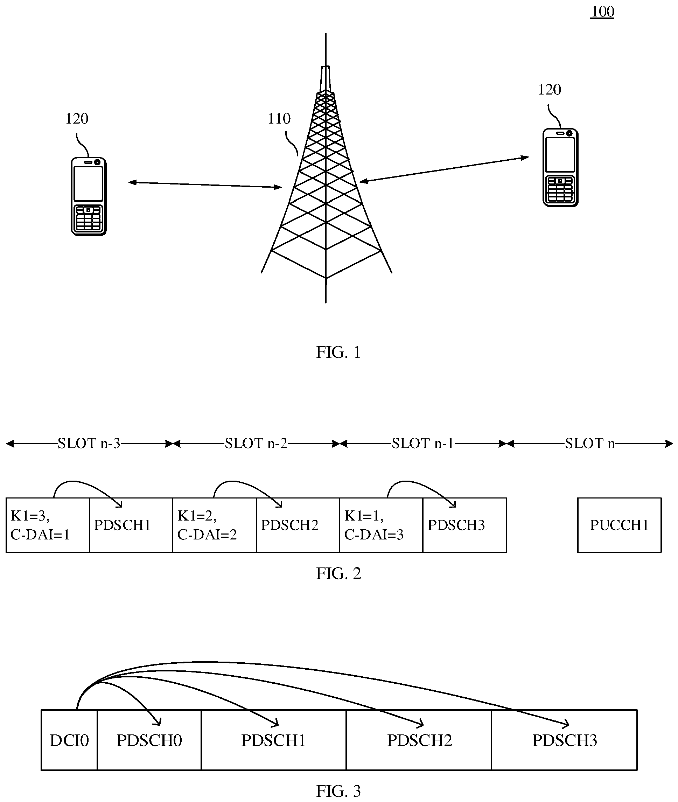

Exemplarily, as illustrated in FIG. 1, a communication system 100 may include a network device 110. The network device 110 may be a device that can communicate with a terminal device 120 (or referred to as a communication terminal or a terminal). The network device 110 can provide a communication coverage for a specific geographical area and communicate with terminal devices in the coverage area.

FIG. 1 exemplarily illustrates one network device and two terminal devices. Optionally, the communication system 100 may include multiple network devices, and there may be other numbers of terminal devices in a coverage area of each of the network devices, which is not limited herein.

Optionally, the communication system 100 may further include other network entities such as a network controller, a mobility management entity, or the like, which is not limited herein.

It should be understood that, in embodiments of the disclosure, a device having a communication function in a network/system may be referred to as a communication device. Taking the communication system 100 illustrated in FIG. 1 For example, the communication device may include the network device 110 and the terminal device 120 having a communication function, and the network device 110 and the terminal device 120 may be the specific devices described above, which will not be repeated herein. The communication device may also include other devices in the communication system 100, such as a network controller, a mobility management entity, and other network entities, which is not limited herein.

It should be understood that, the terms "system" and "network" herein are usually interchangeable. The term "and/or" herein describes only an association relationship for describing associated objects and represents that three relationships may exist. For example, A and/or B may represent the following three cases: only A exists, both A and B exist, and only B exists. In addition, the character "/" herein generally indicates an "or" relationship between the associated objects.

The terms used in implementation part of the disclosure are only used to illustrate specific implementations of the disclosure, but not intended to limit the disclosure. The terms "first", "second", and the like in the specification, claims, and drawings of the disclosure are used to distinguish different objects, but not to describe a specific order. In addition, the terms "including", "comprising", "having", and any variations thereof are intended to cover non-exclusive inclusions.

It should be understood that, the "indication" mentioned in embodiments of the disclosure may be a direct indication or an indirect indication, or indicate an association. For example, if A indicates B, it can mean that A directly indicates B, for example, B can be obtained through A, or mean that A indicates B indirectly, for example, A indicates C, and B can be obtained through C, or it can also mean that there is an association between A and B.

In the description of embodiments of the disclosure, the term "corresponding" can mean that there is a direct or indirect correspondence between two elements, or that there is an association between two elements, or that there is a relationship of "indicating" and "being indicated", "configuring" and "being configured", and the like.

Optionally, in implementations of the disclosure, indication information or configuration information includes a physical-layer signaling, for example, at least one of downlink control information (DCI), system information (SI), a radio resource control (RRC) signaling, and a media access control-control element (MAC CE).

Optionally, in implementations of the disclosure, a higher-layer parameter or a higher-layer signaling includes at least one of an RRC signaling and a MAC CE.

Optionally, in implementations of the disclosure, the "predefined" can be implemented by pre-saving a corresponding code or table in a device (for example, including the terminal device and the network device) or in other manners that can be used for indicating related information, and the disclosure is not limited in this regard. For example, the "predefined" may mean defined in a protocol.

Optionally, in implementations of the disclosure, the "protocol" may refer to a communication standard protocol, which may include, for example, an LTE protocol, an NR protocol, and a protocol applied to a future communication system, and the disclosure is not limited in this regard.

At present, the research on the NR system mainly considers two frequency bands ("band" for short), i.e., frequency range 1 (FR1) and frequency range 2 (FR2), where frequency ranges of FR1 and FR2 are illustrated in Table 1.

**Table 1: frequency band definition**

| frequency band definition | corresponding frequency band range |
|---|---|
| FR1 | 410 MHz - 7.125 GHz |
| FR2 | 24.25 GHz - 52.6 GHz |

With the evolution of the NR system, the research on technologies on a new frequency band, that is, high frequencies, has also begun. The frequency range of the new frequency band is illustrated in Table 2. For the convenience of description, the new frequency band is denoted by FRX in the disclosure. It should be understood that the name of the frequency band should not constitute any limitation. For example, FRX could be FR3.

**Table 2: new frequency band range**

| frequency band definition | corresponding frequency band range |
|---|---|
| FRX | 52.6 GHz - 71 GHz |

The FRX frequency band includes licensed spectrum and unlicensed spectrum. In other words, the FRX frequency band includes non-shared spectrum and shared spectrum.

An unlicensed spectrum is allocated by a country and region and available for communication of radio devices. The spectrum is generally considered as a shared spectrum. That is, communication devices in different communication systems may utilize the spectrum without applying to the government for dedicated spectrum grants, as long as the regulatory requirements made by the country or region for the spectrum are met.

To enable various communication systems, which perform wireless communication by utilizing an unlicensed spectrum, to coexist on the unlicensed spectrum friendly, some countries or regions have made regulatory requirements that need to be satisfied during use of the unlicensed spectrum. For example, a communication device follows a listen before talk (LBT) rule. That is, the communication device needs to firstly perform channel listening, before transmitting a signal on a channel in an unlicensed spectrum, and the communication device can transmit a signal only if a channel listening result indicates that the channel is idle. If the channel listening result of the communication device for the channel in the unlicensed spectrum indicates that the channel is busy, the communication device may not transmit a signal. For another example, to ensure fairness, during each time of transmission, a duration in which the communication device performs signal transmission using the channel in the unlicensed spectrum may not exceed a certain period of time. For another example, to prevent transmission of other important signals on a channel of the unlicensed spectrum from being affected by a signal transmitted with a high power on the channel, when transmitting a signal on the channel of the unlicensed spectrum, the communication device needs to comply with the limit of not exceeding the maximum power spectral density.

The FRX frequency band may consider a subcarrier spacing (SCS) greater than the SCS of FR2, and current candidate SCSs include at least one of: 240kHz, 480kHz, and 960kHz. For example, numerologies corresponding to these candidate SCSs are illustrated in Table 3 below.

**Table 3: numerologies corresponding to candidate SCSs**

| SCS | symbol length | NCP length | ECP length | symbol with NCP length | slot length |
|---|---|---|---|---|---|
| 240kHz | 4.16µs | 0.292µs | 1.04µs | 4.452µs | 62.5µs |
| 480kHz | 2.08µs | 0.146µs | 0.52µs | 2.226µs | 31.25µs |
| 960kHz | 1.04µs | 0.073µs | 0.26µs | 1.113µs | 15.625µs |

The dynamic codebook feedback in the NR system is introduced below.

For a terminal device with downlink (DL) services, a network device can schedule transmission of a physical downlink shared channel (PDSCH) for the terminal device via a DCI carrying a DL grant. The DL grant DCI contains indication information of a physical uplink control channel (PUCCH) resource. After receiving the PDSCH, the terminal device feeds back a decoding result (ACK or NACK information) of the PDSCH to the network device in the PUCCH resource. The NR system supports dynamic determination of a hybrid automatic repeat request (HARQ) feedback timing. The network device schedules the terminal device to receive the PDSCH via a DCI, where the DCI contains indication information of a PUCCH resource for transmitting a HARQ-ACK corresponding to the PDSCH.

Specifically, the indication information may contain the following.

PUCCH resource indicator, which is used to determine the PUCCH resource.

HARQ feedback timing indicator (PDSCH-to-HARQ_feedback timing indicator), where the HARQ feedback timing indicator is used to dynamically determine a time domain position of a HARQ feedback resource, such as a slot of the HARQ feedback resource, usually represented by K1. The HARQ feedback timing indication information indicates a value in a HARQ feedback timing set. The HARQ feedback timing set may be predefined or configured by the network device. For example, the HARQ feedback timing indication information includes three bits. When the HARQ feedback timing indication information is 000, it indicates a first value in the HARQ feedback timing set. When the HARQ feedback timing indication information is 001, it indicates a second value in the HARQ feedback timing set, and so on. If the HARQ feedback timing indication information indicates invalid K1 in the HARQ feedback timing set (for example, the value of indicated K1 is -1), it means that a slot where the PUCCH resource is located is temporarily uncertain.

The HARQ-ACK feedback performed by the terminal device includes semi-static codebook feedback and dynamic codebook feedback. For example, the semi-static codebook feedback may be Type-1 HARQ-ACK codebook feedback or Type-3 HARQ-ACK codebook feedback, and the dynamic codebook feedback may be Type-2 or eType-2 HARQ-ACK codebook feedback.

If the terminal device is configured with the Type-2 HARQ-ACK codebook feedback, a Type-2 HARQ-ACK codebook includes HARQ-ACK information corresponding to a scheduled PDSCH within one HARQ-ACK feedback window. A DCI format for scheduling the PDSCH includes the following downlink assignment index (DAI) information fields.

Counter DAI (C-DAI) information, where the C-DAI information indicates which DL transmission in DL transmissions within the HARQ feedback window is scheduled by a current DCI, where C-DAI information is ordered according to the order of physical downlink control channel (PDCCH) detection opportunities.

In some cases, for example, in carrier aggregation scenarios, the DCI may further contain the following.

Total DAI (T-DAI) information, where the T-DAI information indicates how many DL transmissions are included in the HARQ feedback window until a current DCI scheduling.

The HARQ feedback window is determined according to the HARQ feedback timing set.

If the terminal device is configured with the eType-2 HARQ-ACK codebook feedback (enhanced dynamic HARQ-ACK codebook), an eType-2 HARQ-ACK codebook includes at least HARQ-ACK information corresponding to PDSCHs in a scheduled group. The network device can group scheduled PDSCHs and indicate grouping information of the PDSCHs via an explicit signaling, so that the terminal device performs corresponding HARQ-ACK feedback according to different groups after receiving a PDSCH. In the eType-2 codebook feedback, a terminal device can be configured with at most two PDSCH groups.

In order to support eType-2 codebook generation and feedback, the DCI format for PDSCH scheduling includes the following information fields.

PDSCH group identifier indicator, where the PDSCH group identifier indicator indicates a channel group to which a PDSCH scheduled by a current DCI belongs. A PDSCH group indicated by the PDSCH group identifier (ID) is referred to as a scheduled group, and another PDSCH group not indicated by the PDSCH group ID is referred to as a non-scheduled group.

New feedback indicator (NFI), where the NFI indicates a start of HARQ-ACK information corresponding to the scheduled group. If the NFI information flips, it means that a HARQ-ACK codebook corresponding to a current scheduled group is reset (or a start of a corresponding HARQ feedback window).

C-DAI information, where the C-DAI information indicates which DL transmission in DL transmissions corresponding to a scheduled group within the HARQ feedback window is scheduled by a current DCI, where C-DAI information is ordered according to the order of PDCCH detection opportunities.

In some cases, for example, in carrier aggregation scenarios, the DCI may further contain the following.

T-DAI information, where the T-DAI information indicates how many DL transmissions of a corresponding scheduled group are included in the HARQ feedback window until a current DCI scheduling.

Indicator of number of feedback requested groups, where the indicator indicates that HARQ-ACK information corresponding to one PDSCH group or two PDSCH groups needs to be fed back. If the information field of the number (i.e., quantity) of feedback requested groups is set to 0, the terminal device needs to perform HARQ-ACK feedback for the current scheduled group. If the information field of the number feedback requested groups is set to 1, the terminal device needs to perform HARQ-ACK feedback for both groups, i.e., the scheduled group and the non-scheduled group.

If the terminal device is configured with the eType-2 codebook feedback manner, since the terminal device can feed back HARQ-ACK information corresponding to two PDSCH groups at most, to make the codebook fed back more accurate, the network device can also configure indication information for generating a HARQ-ACK codebook of the non-scheduled group for the terminal device in the DCI format via a higher-layer parameter.

NFI of the non-scheduled group, where the NFI of the non-scheduled group with a PDSCH group ID of the non-scheduled group jointly indicates the HARQ-ACK codebook corresponding to the non-scheduled group within the HARQ feedback window.

T-DAI of the non-scheduled group, where the T-DAI of the non-scheduled group indicates a total number of HARQ-ACK information included in the non-scheduled group within the HARQ feedback window.

The HARQ feedback window is determined according to at least one of the NFI information, the HARQ feedback timing set, and the PUCCH resource.

Based on the above information fields in the DCI, the terminal device can dynamically generate an eType-2 codebook and transmit HARQ-ACK information.

FIG. 2 illustrates an example of a C-DAI indication in the case of Type-2 HARQ-ACK codebook feedback provided in implementations of the disclosure.

As illustrated in FIG. 2, assume that in a DCI received by the terminal device in slot n-3, K1 is 3 and C-DAI=1, and the DCI schedules PDSCH 1; in a DCI received in slot n-2, K1 is 2 and C-DAI=2, and the DCI schedules PDSCH 2; in a DCI received in slot n-1, K1 is 1 and C-DAI=3, and the DCI schedules PDSCH 3. That is, HARQ feedback timing indication information K1 contained in the above DCIs all indicates that a feedback time unit is slot n, and the terminal device can determine that PDSCH 1, PDSCH 2, and PDSCH 3 are the first DL transmission, the second DL transmission, and the third DL transmission within the HARQ feedback window according to the received C-DAI information. Correspondingly, a HARQ-ACK codebook fed back by the terminal device on PUCCH 1 in slot n contains a decoding result of PDSCH 1, a decoding result of PDSCH 2, and a decoding result of PDSCH 3 in sequence.

The number of DL transmissions will be described below with reference to Table 4 and Table 5. Table 4 illustrates a schematic table indicating the sequence number of a DL transmission or the number (that is, quantity) of DL transmissions when C-DAI information or T-DAI information in the DCI for DL scheduling includes two bits. Table 5 illustrates a schematic table indicating the sequence number of a DL transmission or the number of DL transmissions when C-DAI information in the DCI for DL scheduling includes one bit. LSB represents a least significant bit (LSB), and MSB represents a most significant bit (MSB).

**Table 4**

| 2 bits of DAI information MSB, LSB | the value of C-DAI information or T-DAI information | Y≥1, Y indicates the sequence number of a DL transmission or the number of DL transmissions, T_{D} =4 |
|---|---|---|
| 0, 0 | 1 | (Y-1) mod T_{D} + 1 = 1 |
| 0, 1 | 2 | (Y-1) mod T_{D} + 1 = 2 |
| 1, 0 | 3 | (Y-1) mod T_{D} + 1 = 3 |
| 1, 1 | 4 | (Y-1) mod T_{D} + 1 = 4 |

As illustrated in Table 4, the value of the C-DAI information ranges from 1 to 4, and assume that the value indicated by the C-DAI information received by the terminal device is M, the terminal device determines the sequence number of a DL transmission corresponding to the value of M according to the C-DAI information and the reception of DL transmissions. For example, for the first DL transmission, C-DAI=1; for the second DL transmission, C-DAI=2; for the third DL transmission, C-DAI=3; for the fourth DL transmission, C-DAI=4; for the fifth DL transmission, C-DAI=1; for the sixth DL transmission, C-DAI=2; for the seventh DL transmission, C-DAI=3; for the eighth DL transmission, C-DAI=4; and so on. Mod represents remainder.

**Table 5**

| 1 bit of DAI information MSB, LSB | the value of C-DAI information | Y≥1, Y indicates the sequence number of a DL transmission or the number of DL transmissions, T_{D} =2 |
|---|---|---|
| 0 | 1 | (Y-1) mod T_{D} + 1 = 1 |
| 1 | 2 | (Y-1) mod T_{D} + 1 = 2 |

As illustrated in Table 5, the value of the C-DAI information ranges from 0 to 1, and assume that the value indicated by the C-DAI information received by the terminal device is M, the terminal device determines the sequence number of a DL transmission corresponding to the value of M according to the C-DAI information and the reception of DL transmissions. For example, for the first DL transmission, C-DAI=1; for the second DL transmission, C-DAI=2; for the third DL transmission, C-DAI=1; for the fourth DL transmission, C-DAI=2; and so on.

In high-frequency systems, each slot occupies a shorter duration due to a larger SCS. If the PDSCH is still scheduled on a per slot basis as in low-frequency systems, the terminal device needs to detect the PDCCH in each slot, which requires the terminal device to have strong processing capabilities. To reduce the requirement for the processing capabilities of the terminal device, a scheduling manner where one DCI schedules multiple physical channels may be considered.

For example, in DL transmission, the network device can schedule transmission of at least two physical channels (such as PDSCH) with one DCI, or activate at least two DL resources for transmission of at least two physical channels with one DCI, where the at least two DL resources may belong to the same SPS resource configuration, or may belong to different SPS resource configurations. The at least two physical channels include a first physical channel and a second physical channel. The first physical channel and the second physical channel may be used to transmit different transport blocks (TB), or may be used to transmit the same TB.

FIG. 3 illustrates an example of scheduling multiple physical channels by one control information provided in implementations of the disclosure.

As illustrated in FIG. 3, the network device can schedule transmission of four PDSCHs with DCI 0, and the four PDSCHs include PDSCH 0, PDSCH 1, PDSCH 2, and PDSCH 3. PDSCH 0, PDSCH 1, PDSCH 2, and PDSCH 3 are used to transmit different TBs respectively.

In the high-frequency system, if a scheduling manner where one DCI schedules multiple physical channels is introduced, when the terminal device receives a DCI which schedules multiple physical channels, how to understand received information in the DCI and how to perform HARQ-ACK feedback on the multiple physical channels received according to the DCI are problems to be solved in the disclosure.

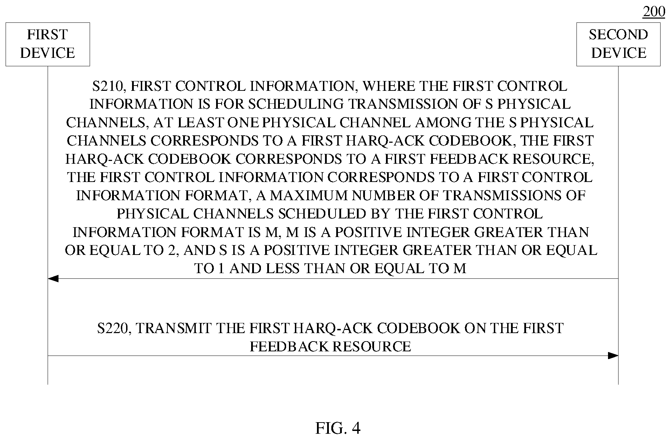

FIG. 4 illustrates a schematic flowchart of a wireless communication method 200 according to implementations of the disclosure. The method 200 may be performed through the interaction between a first device and a second device.

As illustrated in FIG. 4, the method 200 may include the following.

S210, the first device receives first control information transmitted by the second device, where the first control information is for scheduling transmission of S physical channels, at least one physical channel among the S physical channels corresponds to a first HARQ-ACK codebook, the first HARQ-ACK codebook corresponds to a first feedback resource, the first control information corresponds to a first control information format, a maximum number of transmissions of physical channels scheduled by the first control information format is M, M is a positive integer greater than or equal to 2, and S is a positive integer greater than or equal to 1 and less than or equal to M.

S220, the first device transmits the first HARQ-ACK codebook on the first feedback resource.

Based on the technical solutions above, the first control information format corresponding to the first control information supports to schedule a maximum number of M transmissions of physical channels, which can ensure that DL transmissions of the terminal device can be scheduled in each slot even when the terminal device does not monitor the PDCCH in each slot, thereby improving the PDSCH scheduling manner and improving system performance. Especially for the high-frequency system, the requirement for capabilities of the terminal device to monitor the PDCCH can be reduced. In addition, since the first control information is for scheduling transmission of S physical channels, at least one physical channel among the S physical channels is mapped to the first HARQ-ACK codebook, and then the first HARQ-ACK codebook is transmitted over the first feedback resource, which ensures that the first device performs HARQ-ACK feedback on the physical channel scheduled by the first control information, thereby ensuring communication quality.

Optionally, the at least one physical channel includes a PDSCH, the first device includes a terminal device, the second device includes a network device, and the first control information includes a DCI.

Optionally, the at least one physical channel includes a sidelink (SL) physical channel, the first device includes a first terminal device, and the second device includes a second terminal device or a network device. Optionally, the first control information includes sidelink control information (SCI) or a DCI.

Optionally, the first control information is for scheduling transmission of the S physical channels as follows. The first control information is grant information, and the grant information dynamically schedules transmission of the S physical channels, or the first control information is semi-persistent scheduling (SPS) configuration activation information, and the activation information activates transmission of the S physical channels.

Optionally, the first feedback resource includes an uplink (UL) resource. For example, the first feedback resource includes a PUCCH resource or a physical uplink shared channel (PUSCH) resource.

Optionally, the first feedback resource includes a SL resource. For example, the first feedback resource includes a physical sidelink feedback channel (PSFCH) resource.

Optionally, the at least one physical channel among the S physical channels corresponds to the first HARQ-ACK codebook as follows. All physical channels among the S physical channels correspond to the first HARQ-ACK codebook.

Optionally, the at least one physical channel among the S physical channels corresponds to the first HARQ-ACK codebook as follows. A first physical channel among the S physical channels corresponds to the first HARQ-ACK codebook, where a time interval between the first physical channel and the first feedback resource satisfies a processing timing.

Optionally, the at least one physical channel among the S physical channels includes all physical channels among the S physical channels, or the at least one physical channel among the S physical channels includes a first physical channel among the S physical channels, where a time interval between the first physical channel and the first feedback resource satisfies a processing timing.

Optionally, the time interval between the first physical channel and the first feedback resource satisfies the processing timing as follows. A time interval between an end of the first physical channel and a start of the first feedback resource satisfies the processing timing, or the time interval between the end of the first physical channel and the start of the first feedback resource is greater than or equal to a predefined value.

Optionally, the at least one physical channel among the S physical channels corresponds to the first HARQ-ACK codebook as follows. The first HARQ-ACK codebook contains HARQ-ACK information corresponding to the at least one physical channel among the S physical channels.

Optionally, all physical channels among the S physical channels correspond to the first HARQ-ACK codebook as follows. The first HARQ-ACK codebook contains HARQ-ACK information corresponding to all physical channels among the S physical channels.

Optionally, the first control information contains a first DCI, and the first DCI corresponds to a first DCI format. Optionally, the first DCI format includes DCI format 1_1 and/or DCI format 1_2. Optionally, the first DCI format includes other DCI formats that allow one DCI to schedule multiple PDSCHs, for example, DCI format 1_x.

In implementations of the disclosure, the network device can schedule transmission of at least two physical channels (such as PDSCH) with one control information (such as DCI), or activate at least two preconfigured resources (such as DL resource) for transmission of at least two physical channels (such as SPS PDSCH) with one control information (such as DCI). In the case of configuring dynamic codebook feedback (such as Type-2 or eType-2), how the terminal device generates the first HARQ-ACK codebook containing HARQ-ACK information corresponding to the at least one physical channel to perform HARQ-ACK feedback for the received multiple physical channels is a further technical problem to be solved in the disclosure. Optionally, the at least two preconfigured resources may belong to the same SPS resource configuration, or may belong to different SPS resource configurations.

In some implementations of the disclosure, the first control information includes first scheduling counter information, and the first scheduling counter information indicates: an ordering of a first physical channel among the S physical channels in physical channels transmitted within a HARQ feedback window, or an ordering of a last physical channel among the S physical channels in the physical channels transmitted within the HARQ feedback window, or an ordering of the first control information in control information transmitted by the second device within the HARQ feedback window.

Optionally, the first scheduling counter information is associated with at least one of: a first physical channel among physical channels scheduled by the first control information, a last physical channel among the physical channels scheduled by the first control information, or the first control information.

Optionally, the first scheduling counter information is used to determine the first HARQ-ACK codebook.

Optionally, the first scheduling counter information is used to determine a position of at least one physical channel among the S physical channels in the first HARQ-ACK codebook.

Optionally, in the case of a single carrier, the first scheduling counter information is further used to determine the size of the first HARQ-ACK codebook.

In other words, optionally, on condition that the first control information includes the first scheduling counter information, the first device determines the first HARQ-ACK codebook according to the first scheduling counter information. For example, the first device orders (that is, sorts) physical channels received within the HARQ feedback window according to the first scheduling counter information, and determines a position of HARQ-ACK information corresponding to a physical channel in the first HARQ-ACK codebook in ascending order of the physical channels.

Optionally, the ordering of the first physical channel among the S physical channels in the physical channels transmitted within the HARQ feedback window can be considered as the sequence number of the first physical channel among the S physical channels in the physical channels transmitted within the HARQ feedback window.

Optionally, the ordering of the last physical channel among the S physical channels in the physical channels transmitted within the HARQ feedback window can be considered as the sequence number of the last physical channel among the S physical channels in the physical channels transmitted within the HARQ feedback window.

Optionally, the ordering of the first control information in the control information transmitted by the second device within the HARQ feedback window can be considered as the sequence number of the first control information in the control information transmitted by the second device within the HARQ feedback window.

For example, the first control information includes the first scheduling counter information, and the first scheduling counter information indicates: the sequence number of the first physical channel among the physical channels scheduled by the first control information in the physical channels transmitted within the HARQ feedback window, or the sequence number of the last physical channel among the physical channels scheduled by the first control information in the physical channels transmitted within the HARQ feedback window, or the sequence number of the first control information in the control information transmitted by the second device within the HARQ feedback window.

Optionally, physical channels corresponding to the first scheduling counter information are ordered according to the order of control channel detection opportunities, which is, for example, consistent with an ordering manner of PDCCH detection opportunities in the related art.

Optionally, a number of bits of the first scheduling counter information is greater than or equal to 2.

For example, the first control information is a first DCI, the first scheduling counter information is C-DAI information, the C-DAI information corresponds to three bits, and the C-DAI information indicates the sequence number of a first DL transmission among DL transmissions scheduled by the current first DCI in DL transmissions within the HARQ feedback window. The C-DAI information in the first DCI will be described below with reference to Table 6.

**Table 6**

| 3 bits of C-DAI information | the value of C-DAI information | Y≥1, Y indicates the sequence number of the first DL transmission among DL transmissions scheduled by the first DCI, T_{D}=8 |
|---|---|---|
| 0, 0, 0 | 1 | (Y-1) mod T_{D} + 1 = 1 |
| 0, 0, 1 | 2 | (Y-1) mod T_{D} + 1 = 2 |
| 0, 1, 0 | 3 | (Y-1) mod T_{D} + 1 = 3 |
| 0, 1, 1 | 4 | (Y-1) mod T_{D} + 1 = 4 |
| 1, 0, 0 | 5 | (Y-1) mod T_{D} + 1 = 5 |
| 1,0,1 | 6 | (Y-1) mod T_{D} + 1 = 6 |
| 1, 1, 0 | 7 | (Y-1) mod T_{D} + 1 = 7 |
| 1, 1, 1 | 8 | (Y-1) mod T_{D} + 1 = 8 |

As illustrated in Table 6, the value of the C-DAI information ranges from 1 to 8, and assume that the value indicated by the C-DAI information received by the terminal device is M, the terminal device determines the sequence number of a DL transmission corresponding to the value of M according to the C-DAI information and the reception of DL transmissions. For example, when the first DL transmission among the DL transmissions scheduled by the first DCI is the first DL transmission, C-DAI=1; when the first DL transmission among the DL transmissions scheduled by the first DCI is the second DL transmission, C-DAI=2; when the first DL transmission among the DL transmissions scheduled by the first DCI is the third DL transmission, C-DAI=3; when the first DL transmission among the DL transmissions scheduled by the first DCI is the fourth DL transmission, C-DAI=4; when the first DL transmission among the DL transmissions scheduled by the first DCI is the fifth DL transmission, C-DAI=5; when the first DL transmission among the DL transmissions scheduled by the first DCI is the sixth DL transmission, C-DAI=6; when the first DL transmission among the DL transmissions scheduled by the first DCI is the seventh DL transmission, C-DAI=7; when the first DL transmission among the DL transmissions scheduled by the first DCI is the eighth DL transmission, C-DAI=8; when the first DL transmission among the DL transmissions scheduled by the first DCI is the ninth DL transmission, C-DAI=1; when the first DL transmission among the DL transmissions scheduled by the first DCI is the tenth DL transmission, C-DAI=2; and so on.

In some implementations of the disclosure, the first control information includes first scheduling counter information and first indication information, the first scheduling counter information indicates: an ordering of a first physical channel among the S physical channels in physical channels transmitted within a HARQ feedback window, or an ordering of a last physical channel among the S physical channels in the physical channels transmitted within the HARQ feedback window, and the first indication information indicates an ordering of the first control information in control information transmitted by the second device within the HARQ feedback window.

Optionally, the first scheduling counter information is associated with at least one of: a first physical channel among physical channels scheduled by the first control information, or a last physical channel among the physical channels scheduled by the first control information. Optionally, the first indication information is associated with the first control information.

Optionally, the first scheduling counter information and the first indication information are used to determine the first HARQ-ACK codebook.

In other words, optionally, on condition that the first control information includes the first scheduling counter information and the first indication information, the first device determines the first HARQ-ACK codebook according to the first scheduling counter information and the first indication information.

Optionally, the ordering of the first physical channel among the S physical channels in the physical channels transmitted within the HARQ feedback window can be considered as the sequence number of the first physical channel among the S physical channels in the physical channels transmitted within the HARQ feedback window.

Optionally, the ordering of the last physical channel among the S physical channels in the physical channels transmitted within the HARQ feedback window can be considered as the sequence number of the last physical channel among the S physical channels in the physical channels transmitted within the HARQ feedback window.

Optionally, the ordering of the first control information in the control information transmitted by the second device within the HARQ feedback window can be considered as the sequence number of the first control information in the control information transmitted by the second device within the HARQ feedback window.

For example, the first control information includes the first scheduling counter information and the first indication information, the first scheduling counter information indicates: the sequence number of the first physical channel among the physical channels scheduled by the first control information in the physical channels transmitted within the HARQ feedback window, or the sequence number of the last physical channel among the physical channels scheduled by the first control information in the physical channels transmitted within the HARQ feedback window, and the first indication information indicates the sequence number of the first control information in the control information transmitted by the second device within the HARQ feedback window.

Optionally, a number of bits of the first scheduling counter information is greater than or equal to 2.

In some implementations of the disclosure, the first control information includes first scheduling total-number information, and the first scheduling total-number information indicates: a total number of physical channels transmitted until a first physical channel among the S physical channels within a HARQ feedback window, or a total number of physical channels transmitted until a last physical channel among the S physical channels within the HARQ feedback window, or a total number of control information transmitted by the second device until the first control information within the HARQ feedback window.

Optionally, the first scheduling total-number information is associated with at least one of: a first physical channel among physical channels scheduled by the first control information, a last physical channel among the physical channels scheduled by the first control information, or the first control information.

Optionally, the first scheduling total-number information is used to determine the first HARQ-ACK codebook.

Optionally, the first scheduling total-number information is used to determine the size of the first HARQ-ACK codebook.

In other words, on condition that the first control information includes the first scheduling total-number information, the first device determines the first HARQ-ACK codebook according to the first scheduling total-number information. For example, the first device determines how many physical channels have been received according to the first scheduling total-number information, and determines the size of the first HARQ-ACK codebook according to the number of physical channels.

Optionally, the first scheduling total-number information indicates the total number of physical channels transmitted until the first physical channel among the S physical channels within the HARQ feedback window, and the total number of physical channels transmitted until the last physical channel among the S physical channels within the HARQ feedback window is determined according to the first scheduling total-number information and the value of S. For example, if the first scheduling total-number information indicates that there are 9 physical channels until the first physical channel among the S physical channels within the HARQ feedback window, and the first control information schedules 4 physical channels, there are 13 physical channels until the last physical channel among the S physical channels within the HARQ feedback window.

Optionally, a number of bits of the first scheduling total-number information is greater than or equal to 2.

For example, the first control information is a first DCI, the first scheduling total-number information is T-DAI information, the T-DAI information corresponds to four bits, and the T-DAI information indicates the total number of physical channels until the first physical channel among the S physical channels within the HARQ feedback window. The T-DAI information in the first DCI will be described below with reference to Table 7.

**Table 7**

| 4 bits of T-DAI information | the value of T-DAI information | Y≥1, Y indicates the total number of DL transmissions until the first DL transmission among DL transmissions scheduled by the current first DCI, T_{D} =16 |
|---|---|---|
| 0, 0, 0, 0 | 1 | (Y-1) mod T_{D} + 1 = 1 |
| 0, 0, 0, 1 | 2 | (Y-1) mod T_{D} + 1 = 2 |
| 0, 0, 1, 0 | 3 | (Y-1) mod T_{D} + 1 = 3 |
| 0, 0, 1, 1 | 4 | (Y-1) mod T_{D} + 1 = 4 |
| 0, 1, 0, 0 | 5 | (Y-1) mod T_{D} + 1 = 5 |
| 0, 1, 0, 1 | 6 | (Y-1) mod T_{D} + 1 = 6 |
| 0, 1, 1,0 | 7 | (Y-1) mod T_{D} + 1 = 7 |
| 0, 1, 1, 1 | 8 | (Y-1) mod T_{D} + 1 = 8 |
| 1, 0, 0, 0 | 9 | (Y-1) mod T_{D} + 1 = 9 |
| 1, 0, 0, 1 | 10 | (Y-1) mod T_{D} + 1 = 10 |
| 1,0, 1,0 | 11 | (Y-1) mod T_{D} + 1 = 11 |
| 1, 0, 1, 1 | 12 | (Y-1) mod T_{D} + 1 = 12 |
| 1, 1,0,0 | 13 | (Y-1) mod T_{D} + 1 = 13 |
| 1,1,0,1 | 14 | (Y-1) mod T_{D} + 1 = 14 |
| 1, 1, 1, 0 | 15 | (Y-1) mod T_{D} + 1 = 15 |
| 1, 1, 1, 1 | 16 | (Y-1) mod T_{D} + 1 = 16 |

As illustrated in Table 7, the value of the T-DAI information ranges from 1 to 16, and assume that the value indicated by the T-DAI information received by the terminal device is M, the terminal device determines the total number of DL transmissions corresponding to the value of M according to the T-DAI information and the reception of DL transmissions. For example, when there are 1 DL transmission until the first DL transmission among the DL transmissions scheduled by the current first DCI, T-DAI=1; when there are 2 DL transmissions until the first DL transmission among the DL transmissions scheduled by the current first DCI, T-DAI=2; when there are 3 DL transmissions until the first DL transmission among the DL transmissions scheduled by the current first DCI, T-DAI=3; ..., when there are 16 DL transmissions until the first DL transmission among the DL transmissions scheduled by the current first DCI, T-DAI=16; when there are 17 DL transmissions until the first DL transmission among the DL transmissions scheduled by the current first DCI, T-DAI=1; when there are 18 DL transmissions until the first DL transmission among the DL transmissions scheduled by the current first DCI, T-DAI=2; and so on.

In some implementations of the disclosure, the first control information includes first scheduling counter information and first scheduling total-number information, and the first scheduling counter information and the first scheduling total-number information jointly indicate: a total number of physical channels transmitted until a first physical channel among the S physical channels within a HARQ feedback window, or a total number of physical channels transmitted until a last physical channel among the S physical channels within the HARQ feedback window.

Optionally, the j oint indication information (that is, the first scheduling counter information and the first scheduling total-number information) indicates the total number of physical channels transmitted until the first physical channel among the S physical channels within the HARQ feedback window, and the total number of physical channels transmitted until the last physical channel among the S physical channels within the HARQ feedback window is determined according to the joint indication information and the value of S.

In some implementations of the disclosure, the first control information includes first scheduling counter information, first scheduling total-number information, and first indication information, the first scheduling counter information and the first scheduling total-number information jointly indicate: a total number of physical channels transmitted until a first physical channel among the S physical channels within a HARQ feedback window, or a total number of physical channels transmitted until a last physical channel among the S physical channels within the HARQ feedback window, and the first indication information indicates an ordering of the first control information in control information transmitted by the second device within the HARQ feedback window.

Optionally, the joint indication information (that is, the first scheduling counter information and the first scheduling total-number information) indicates the total number of physical channels transmitted until the first physical channel among the S physical channels within the HARQ feedback window, and the total number of physical channels transmitted until the last physical channel among the S physical channels within the HARQ feedback window is determined according to the joint indication information and the value of S.

Optionally, the terminal device is configured with Type-2 codebook feedback or dynamic codebook feedback.

Optionally, the HARQ feedback window is determined according to at least one of a HARQ feedback timing set and the value of M.

In some implementations of the disclosure, the first control information includes first group ID indication information, and the first group ID indication information indicates a first group, where all physical channels among the S physical channels correspond to the first group, or at least one physical channel among the S physical channels corresponds to the first group.

Optionally, the at least one physical channel among the S physical channels corresponds to the first group as follows. A first physical channel among the S physical channels corresponds to the first group, where a time interval between the first physical channel and the first feedback resource satisfies a processing timing.

Optionally, the first group ID indication information is used to determine the first HARQ-ACK codebook.

Optionally, the first control information further includes NFI information, and the NFI information and the first group ID indication information are jointly used to determine the first HARQ-ACK codebook.

In other words, on condition that the first control information includes the PDSCH group ID indication information, the first device determines a HARQ-ACK codebook corresponding to the first group in the first HARQ-ACK codebook according to the first group ID indication information. For example, the first group ID indication information indicates a first group of physical channels, and the first HARQ-ACK codebook contains HARQ-ACK information corresponding to the first group of physical channels.

In implementations, the first control information further includes first scheduling counter information, and the first scheduling counter information indicates: an ordering of a first physical channel among the S physical channels in physical channels corresponding to the first group transmitted within a HARQ feedback window, or an ordering of a last physical channel among the S physical channels in the physical channels corresponding to the first group transmitted within the HARQ feedback window, or an ordering of the first control information in control information corresponding to the first group transmitted by the second device within the HARQ feedback window.

Optionally, the first scheduling counter information is used to determine the first HARQ-ACK codebook.

Optionally, the first scheduling counter information is used to determine a position of at least one physical channel among the S physical channels in a HARQ-ACK codebook corresponding to the first group included in the first HARQ-ACK codebook.

Optionally, in the case of a single carrier, the first scheduling counter information is further used to determine the size of the HARQ-ACK codebook corresponding to the first group.

In other words, on condition that the first control information includes the first scheduling counter information and the first group ID indication information, the first device determines the first HARQ-ACK codebook according to the first scheduling counter information and the first group ID indication information. For example, the first device orders physical channels belonging to the first group received within the HARQ feedback window according to the first scheduling counter information, and determines a position of HARQ-ACK information corresponding to each physical channel in the HARQ-ACK codebook corresponding to the first group included in the first A HARQ-ACK codebook in ascending order of the physical channels.

Optionally, the ordering of the first physical channel among the S physical channels in the physical channels corresponding to the first group transmitted within the HARQ feedback window can be considered as the sequence number of the first physical channel among the S physical channels in the physical channels corresponding to the first group transmitted within the HARQ feedback window.

Optionally, the ordering of the last physical channel among the S physical channels in the physical channels corresponding to the first group transmitted within the HARQ feedback window can be considered as the sequence number of the last physical channel among the S physical channels in the physical channels corresponding to the first group transmitted within the HARQ feedback window.

Optionally, the ordering of the first control information in the control information corresponding to the first group transmitted by the second device within the HARQ feedback window can be considered as the sequence number of the first control information in the control information corresponding to the first group transmitted by the second device within the HARQ feedback window.

For example, the first control information includes the first scheduling counter information, and the first scheduling counter information indicates: the sequence number of the first physical channel among the physical channels scheduled by the first control information in the physical channels corresponding to the first group transmitted within the HARQ feedback window, or the sequence number of the last physical channel among the physical channels scheduled by the first control information in the physical channels corresponding to the first group transmitted within the HARQ feedback window, or the sequence number of the first control information in the control information corresponding to the first group transmitted by the second device within the HARQ feedback window.

Optionally, a number of bits of the first scheduling counter information is greater than or equal to 2.

In other implementations, the first control information further includes first scheduling counter information and first indication information, the first scheduling counter information indicates: an ordering of a first physical channel among the S physical channels in physical channels corresponding to the first group transmitted within a HARQ feedback window, or an ordering of a last physical channel among the S physical channels in the physical channels corresponding to the first group transmitted within the HARQ feedback window, and the first indication information indicates an ordering of the first control information in control information corresponding to the first group transmitted by the second device within the HARQ feedback window.

Optionally, the first scheduling counter information and the first indication information are used to determine the first HARQ-ACK codebook.

In other words, on condition that the first control information includes the first scheduling counter information, the first group ID indication information, and the first indication information, the first device determines a HARQ-ACK codebook corresponding to the first group indicated by the first group ID indication information in the first HARQ-ACK codebook according to the first scheduling counter information, the first group ID indication information, and the first indication information.

Optionally, the ordering of the first physical channel among the S physical channels in the physical channels corresponding to the first group transmitted within the HARQ feedback window can be considered as the sequence number of the first physical channel among the S physical channels in the physical channels corresponding to the first group transmitted within the HARQ feedback window.

Optionally, the ordering of the last physical channel among the S physical channels in the physical channels corresponding to the first group transmitted within the HARQ feedback window can be considered as the sequence number of the last physical channel among the S physical channels in the physical channels corresponding to the first group transmitted within the HARQ feedback window.

Optionally, the ordering of the first control information in the control information corresponding to the first group transmitted by the second device within the HARQ feedback window can be considered as the sequence number of the first control information in the control information corresponding to the first group transmitted by the second device within the HARQ feedback window.

For example, the first control information includes the first scheduling counter information and the first indication information, the first scheduling counter information indicates: the sequence number of the first physical channel among the physical channels scheduled by the first control information in the physical channels corresponding to the first group transmitted within the HARQ feedback window, or the sequence number of the last physical channel among the physical channels scheduled by the first control information in the physical channels corresponding to the first group transmitted within the HARQ feedback window, and the first indication information indicates the sequence number of the first control information in the control information corresponding to the first group transmitted by the second device within the HARQ feedback window.

Optionally, a number of bits of the first scheduling counter information is greater than or equal to 2.

In other implementations, the first control information further includes first scheduling total-number information, and the first scheduling total-number information indicates: a total number of physical channels corresponding to the first group transmitted until a first physical channel among the S physical channels within a HARQ feedback window, or a total number of physical channels corresponding to the first group transmitted until a last physical channel among the S physical channels within the HARQ feedback window, or a total number of control information corresponding to the first group transmitted by the second device until the first control information within the HARQ feedback window.

Optionally, the first scheduling total-number information is used to determine the first HARQ-ACK codebook.

Optionally, the first scheduling total-number information is used to determine the size of a HARQ-ACK codebook corresponding to the first group in the first HARQ-ACK codebook.

In other words, on condition that the first control information includes the first scheduling total-number information and the first group ID indication information, the first device determines the first HARQ-ACK codebook according to the first scheduling total-number information and the first group ID indication information. For example, the first device determines how many physical channels belonging to the first group have been received according to the first scheduling total-number information, and determines the size of the HARQ-ACK codebook corresponding to the first group in the first HARQ-ACK codebook according to the number of physical channels.

Optionally, the first scheduling total-number information indicates the total number of physical channels corresponding to the first group transmitted until the first physical channel among the S physical channels within the HARQ feedback window, and the total number of physical channels corresponding to the first group transmitted until the last physical channel among the S physical channels within the HARQ feedback window is determined according to the first scheduling total-number information and the value of S. For example, if the first scheduling total-number information indicates that the first group includes 9 physical channels until the first physical channel among the S physical channels within the HARQ feedback window, and the first control information schedules 4 physical channels, the first group includes 13 physical channels until the last physical channel among the S physical channels within the HARQ feedback window.

Optionally, a number of bits of the first scheduling total-number information is greater than or equal to 2.

In other implementations, the first control information further includes second scheduling total-number information, the second scheduling total-number information indicates a total number of physical channels corresponding to a second group transmitted until the first control information within a HARQ feedback window, and the second group is different from the first group.

Optionally, the second scheduling total-number information is used to determine a HARQ-ACK codebook of the second group.

Optionally, the second scheduling total-number information is used to determine the size of the HARQ-ACK codebook corresponding to the second group in the first HARQ-ACK codebook.

In other words, on condition that the first control information includes the second scheduling total-number information corresponding to a non-scheduled group, the first device determines the HARQ-ACK codebook of the non-scheduled group according to the second scheduling total-number information. For example, the first device determines how many physical channels belonging to the second group have been received according to the second scheduling total-number information, and determines the size of the HARQ-ACK codebook corresponding to the second group in the first HARQ-ACK codebook according to the number of physical channels.

Optionally, a number of bits of the second scheduling total-number information is greater than or equal to 2.

It should be noted that the first group and the second group herein are used to distinguish different objects rather than to indicate specific group identifiers. For example, the terminal device is configured with two groups, namely group 1 and group 2, the first group may refer to group 1 or group 2, and the second group may refer to group 2 or group 1 correspondingly.

In some implementations of the disclosure, the first control information further includes first scheduling counter information and first scheduling total-number information, and the first scheduling counter information and the first scheduling total-number information jointly indicate: a total number of physical channels corresponding to the first group transmitted until a first physical channel among the S physical channels within a HARQ feedback window, or a total number of physical channels corresponding to the first group transmitted until a last physical channel among the S physical channels within the HARQ feedback window.

Optionally, the first scheduling counter information and the first scheduling total-number information are used to determine a HARQ-ACK codebook corresponding to the first group in the first HARQ-ACK codebook.

Optionally, the joint indication information (that is, the first scheduling counter information and the first scheduling total-number information) indicates the total number of physical channels corresponding to the first group transmitted until the first physical channel among the S physical channels within the HARQ feedback window, and the total number of physical channels corresponding to the first group transmitted until the last physical channel among the S physical channels within the HARQ feedback window is determined according to the joint indication information and the value of S.

In some implementations of the disclosure, the first control information further includes first scheduling counter information, first scheduling total-number information, and first indication information, the first scheduling counter information and the first scheduling total-number information jointly indicate: a total number of physical channels corresponding to the first group transmitted until a first physical channel among the S physical channels within a HARQ feedback window, or a total number of physical channels corresponding to the first group transmitted until a last physical channel among the S physical channels within the HARQ feedback window, and the first indication information indicates an ordering of the first control information in control information corresponding to the first group transmitted by the second device within the HARQ feedback window.

Optionally, the first scheduling counter information and the first scheduling total-number information are used to determine a HARQ-ACK codebook corresponding to the first group in the first HARQ-ACK codebook.

Optionally, the joint indication information (that is, the first scheduling counter information and the first scheduling total-number information) indicates the total number of physical channels corresponding to the first group transmitted until the first physical channel among the S physical channels within the HARQ feedback window, and the total number of physical channels corresponding to the first group transmitted until the last physical channel among the S physical channels within the HARQ feedback window is determined according to the joint indication information and the value of S.

Optionally, the terminal device is configured with eType-2 codebook feedback or enhanced dynamic codebook feedback.

Optionally, the HARQ feedback window is determined according to at least one of NFI information, a PUCCH resource, a HARQ feedback timing set, and the value of M.

It should be noted that, on condition that one control information can schedule or activate multiple physical channels, if the first device fails to receive certain control information, since the first device is unaware of how many physical channels are scheduled by the lost control information, the first device is not sure how many physical channels are lost. Therefore, a scheme where one control information can dynamically schedule one physical channel is no longer applicable to this new scenario. That is, further enhancement is required. In implementations of the disclosure, the first indication information is introduced, for example, to indicate the sequence number of the first control information currently received in control information transmitted by the second device within the HARQ feedback window, or the number of bits of the first scheduling counter information and/or the first scheduling total-number information is added, or the first scheduling counter information and the first scheduling total-number information jointly indicate the total number of scheduling. Based on this, when failing to receive certain control information, the first device can determine as accurately as possible how many physical channels are lost, that is, make the understanding of the size of the HARQ-ACK codebook as consistent as possible between the terminal device and the network device.

The following will be described with reference to specific examples.

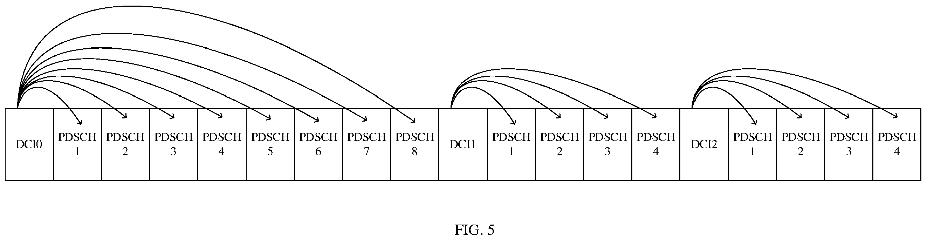

FIG. 5 illustrates an example of physical channels scheduled by multiple control information in a single-carrier scenario provided in implementations of the disclosure.

As illustrated in FIG. 5, for the single-carrier scenario, assume that the network device schedules 8 PDSCH transmissions with DCI 0, schedules 4 PDSCH transmissions with DCI 1, and schedules 4 PDSCH transmissions with DCI 2.

In optional implementations, the DCI contains 4-bit C-DAI information, and the C-DAI information indicates the sequence number of the first PDSCH among the PDSCHs scheduled by the current DCI within the HARQ feedback window. Correspondingly, the C-DAI information in DCI 0 indicates 1 (for example, corresponding bits are "0000"), the C-DAI information in DCI 1 indicates 9 (for example, corresponding bits are "1000"), and the C-DAI information in DCI 2 indicates 13 (for example, corresponding bits are "1100"), as illustrated in Table 7 above. In this example, only if the terminal device loses 16 or more PDSCHs consecutively, the terminal device and the network device may have different understandings of the size of the HARQ-ACK codebook.

In optional implementations, the DCI contains 4-bit C-DAI information, and the C-DAI information indicates the sequence number of the last PDSCH among the PDSCHs scheduled by the current DCI within the HARQ feedback window. Correspondingly, the C-DAI information in DCI 0 indicates 8 (for example, corresponding bits are "0111"), the C-DAI information in DCI 1 indicates 12 (for example, corresponding bits are "1011"), and the C-DAI information in DCI 2 indicates 16 (for example, corresponding bits are "1111"), as illustrated in Table 7 above. In this example, only if the terminal device loses 16 or more PDSCHs consecutively, the terminal device and the network device may have different understandings of the size of the HARQ-ACK codebook.

In optional implementations, the DCI contains 3-bit C-DAI information and 1-bit first indication information, and the C-DAI information indicates the sequence number of the last PDSCH among the PDSCHs scheduled by the current DCI within the HARQ feedback window, and the first indication information indicates the sequence number of the current DCI in DCIs transmitted by the network device within the HARQ feedback window. Correspondingly, in DCI 0, the C-DAI information indicates 8 (for example, corresponding bits are "111"), and the first indication information indicates 1 (for example, a corresponding bit is "0"); in DCI 1, the C-DAI information indicates 12 (for example, corresponding bits are "01 1"), and the first indication information indicates 2 (for example, a corresponding bit is "1"); in DCI 2, the C-DAI information indicates 16 (for example, corresponding bits are "111"), and the first indication information indicates 3 (for example, a corresponding bit is "0"), as illustrated in Table 6 and Table 5 above. In this example, only if the terminal device loses 2 or more DCIs or 8 or more PDSCHs consecutively, the terminal device and the network device may have different understandings of the size of the HARQ-ACK codebook.

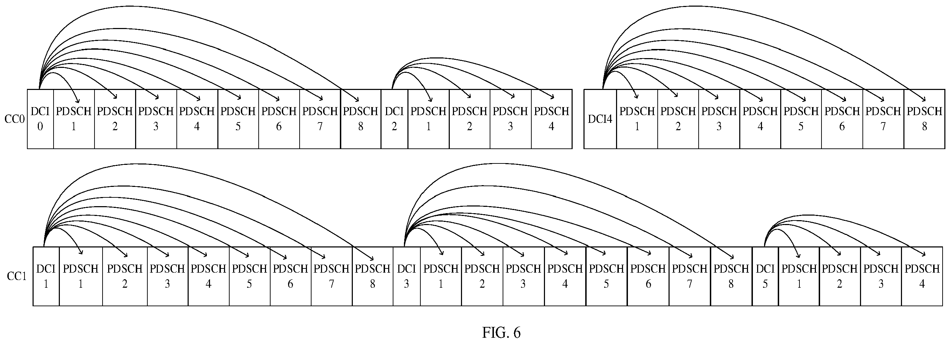

FIG. 6 illustrates an example of physical channels scheduled by multiple control information in a multi-carrier scenario provided in implementations of the disclosure.

As illustrated in FIG. 6, for the multi-carrier scenario, assume that in a first PDCCH detection slot, the network device schedules 8 PDSCH transmissions with DCI 0 on CC 0, and schedules 8 PDSCH transmissions with DCI 1 on CC 1. In a second PDCCH detection slot, the network device schedules 4 PDSCH transmissions with DCI 2 on CC 0, and schedules 8 PDSCH transmissions with DCI 3 on CC 1. In a third PDCCH detection slot, the network device schedules 8 PDSCH transmissions with DCI 4 on CC 0, and schedules 4 PDSCH transmissions with DCI 5 on CC 1.

In optional implementations, the DCI contains 2-bit C-DAI information and 4-bit T-DAI information, the C-DAI information indicates the sequence number of the current DCI in DCIs transmitted by the network device within the HARQ feedback window, and the T-DAI information indicates the total number of PDSCHs until the last PDSCH among the PDSCHs scheduled by the current DCI within the HARQ feedback window. Correspondingly, in DCI 0, the C-DAI information indicates 1 (for example, corresponding bits are "00"), and the T-DAI information indicates 8 (for example, corresponding bits are "0111"); in DCI 1, the C-DAI information indicates 2 (for example, corresponding bits are "01"), and the T-DAI information indicates 16 (for example, corresponding bits are "1111"); in DCI 2, the C-DAI information indicates 3 (for example, corresponding bits are "10"), and the T-DAI information indicates 20 (for example, corresponding bits are "0011"); in DCI 3, the C-DAI information indicates 4 (for example, corresponding bits are "11"), and the T-DAI information indicates 28 (for example, corresponding bits are "1011"); in DCI 4, the C-DAI information indicates 5 (for example, corresponding bits are "00"), and the T-DAI information indicates 36 (for example, corresponding bits are "0011"); in DCI 5, the C-DAI information indicates 6 (for example, corresponding bits are "01"), and the T-DAI information indicates 40 (for example, corresponding bits are "0111"), as illustrated in Table 4 and Table 7 above. In this example, the terminal device may order HARQ-ACK bits in the HARQ-ACK codebook according to the C-DAI information and the T-DAI information, and determine the size of the HARQ-ACK codebook. Since 4 bits can indicate 16 kinds of values, only if the terminal device loses 4 or more DCIs or 16 or more PDSCHs consecutively, the terminal device and the network device may have different understandings of the size of the HARQ-ACK codebook.

In optional implementations, the DCI contains 2-bit C-DAI information and 4-bit T-DAI information, the C-DAI information indicates the sequence number of the first PDSCH among the PDSCHs scheduled by the current DCI within the HARQ feedback window, and the T-DAI information indicates the total number of PDSCHs until the last PDSCH among the PDSCHs scheduled by the current DCI within the HARQ feedback window. Correspondingly, in DCI 0, the C-DAI information indicates 1 (for example, corresponding bits are "00"), and the T-DAI information indicates 8 (for example, corresponding bits are "0111"); in DCI 1, the C-DAI information indicates 9 (for example, corresponding bits are "00"), and the T-DAI information indicates 16 (for example, corresponding bits are "1111"); in DCI 2, the C-DAI information indicates 17 (for example, corresponding bits are "00"), and the T-DAI information indicates 20 (for example, corresponding bits are "0011"); in DCI 3, the C-DAI information indicates 21 (for example, corresponding bits are "00"), and the T-DAI information indicates 28 (for example, corresponding bits are "1011"); in DCI 4, the C-DAI information indicates 29 (for example, corresponding bits are "00"), and the T-DAI information indicates 36 (for example, corresponding bits are "0011"); in DCI 5, the C-DAI information indicates 37 (for example, corresponding bits are "00"), and the T-DAI information indicates 40 (for example, corresponding bits are "0111"). In this example, since 4 bits can indicate 16 kinds of values, only if the terminal device loses 16 or more PDSCHs consecutively, the terminal device and the network device may have different understandings of the size of the HARQ-ACK codebook. In addition, it should be noted that, in this example, the C-DAI information does not provide additional effective information. In the case of losing a DCI, the understanding of the ordering of the HARQ-ACK codebook may be inconsistent between the terminal device and the network device.

In optional implementations, the DCI contains 2-bit C-DAI information and 4-bit T-DAI information, and the 2-bit C-DAI information and 4-bit T-DAI information jointly indicate the total number of PDSCHs until the last PDSCH among the PDSCHs scheduled by the current DCI within the HARQ feedback window. The joint indication of the 2-bit C-DAI information and the 4-bit T-DAI information is referred to as second indication information. Correspondingly, the second indication information in DCI 0 indicates 8; the second indication information in DCI 1 indicates 16; the second indication information in DCI 2 indicates 20; the second indication information in DCI 3 indicates 28; the second indication information in DCI 4 indication 36; and the second indication information in DCI 5 indicates 40. In this example, since 6 bits can indicate 64 kinds of values, only if the terminal device loses 64 or more PDSCHs consecutively, the terminal device and the network device may have different understandings of the size of the HARQ-ACK codebook.

As can be seen from the analysis of FIGs. 5 and 6, the solutions provided in implementations of the disclosure can make the understanding of the size and the ordering of the HARQ-ACK codebook as consistent as possible between the terminal device and the network device.

Implementations of the first scheduling counter information and the first scheduling total-number information are exemplarily described below.

In some implementations of the disclosure, the first scheduling counter information includes C-DAI information and/or counter sidelink assignment index (C-SAI) information.

In some implementations of the disclosure, a number of bits of the first scheduling counter information is greater than or equal to 2.

In some implementations of the disclosure, a number of bits of the first scheduling counter information is determined according to a value of M, and/or the number of bits of the first scheduling counter information is greater than or equal to ceil(log2(M)), where log2 represents a base-2 logarithm, and ceil represents rounding up.

For example, if the maximum number of physical channels that can be scheduled by one control information is 8, that is, M=8, the first scheduling counter information includes 3 bits.

For another example, M=4, ceil(log2(M))=ceil(log2(4))=2, then the first scheduling counter information includes 2 bits. For another example, M=6, ceil(log2(M))=ceil(log2(6))=3, then the first scheduling counter information includes 3 bits.

In some implementations of the disclosure, a number of bits of the first scheduling counter information is determined according to a value of M and a maximum number P of consecutive losses of control information that the first device can tolerant, and/or the number of bits of the first scheduling counter information is equal to ceil(log2(P*M)), where log2 represents a base-2 logarithm, and ceil represents rounding up.

For example, assume that the terminal device consecutively losing two control information is a small probability event (that is, assume that the terminal device does not expect to consecutively lose two control information), if the maximum number of physical channels that can be scheduled by one control information is 8, that is, M =8, the maximum number of physical channels that can be scheduled by two control information is 16. Correspondingly, ceil(log2(P*M)) = ceil(log2(2*8))=4, and the first scheduling counter information includes 4 bits. For another example, assume that the terminal device consecutively losing four control information is a small probability event (that is, assume that the terminal device does not expect to consecutively lose four control information), if the maximum number of physical channels that can be scheduled by one control information is 4, the maximum number of physical channels that can be scheduled by four control information is 16. Correspondingly, ceil(log2(P*M)) = ceil (log2(4*4)) =4, and the first scheduling counter information includes 4 bits.

For another example, M=4, P=2, ceil(log2(P*M)) = ceil(log2(8))=3.

In some implementations of the disclosure, the first scheduling total-number information includes T-DAI information and/or total sidelink assignment index (T-SAI) information.

In some implementations of the disclosure, a number of bits of the first scheduling total-number information is greater than or equal to 2.

In some implementations of the disclosure, a number of bits of the first scheduling total-number information is determined according to a value of M, and/or the number of bits of the first scheduling total-number information is greater than or equal to ceil(log2(M)), where log2 represents a base-2 logarithm, and ceil represents rounding up. For example, M=4, ceil(log2(M)) = ceil(log2(4))=2. For another example, M=8, ceil(log2(M)) = ceil(log2(8))=3.

For example, if the maximum number of physical channels that can be scheduled by the first control information is 8, the first scheduling total-number information includes 3 bits.

In some implementations of the disclosure, a number of bits of the first scheduling total-number information is determined according to a value of M and a maximum number P of consecutive losses of control information that the first device can tolerant, and/or the number of bits of the first scheduling total-number information is equal to ceil(log2(P*M)), where log2 represents a base-2 logarithm, and ceil represents rounding up. For example, M=4, P=2, ceil(log2(P*M)) = ceil(log2(2*4))=3.

For example, assume that the terminal device consecutively losing two control information is a small probability event (that is, assume that the terminal device does not expect to consecutively lose two control information), if the maximum number of physical channels that can be scheduled by one control information is 8, the maximum number of physical channels that can be scheduled by two control information is 16. Correspondingly, ceil(log2(P*M)) = ceil(log2(2*8))=4, and the first scheduling total-number information includes 4 bits. For another example, assume that the terminal device consecutively losing four control information is a small probability event (that is, assume that the terminal device does not expect to consecutively lose four control information), if the maximum number of physical channels that can be scheduled by one control information is 4, the maximum number of physical channels that can be scheduled by four control information is 16. Correspondingly, ceil(log2(P*M))=ceil(log2(4*4))=4, and the first scheduling total-number information includes 4 bits.

It should be noted that, the manner of determining the number of bits of the second scheduling total-number information involved in implementations of the disclosure is the same as the manner of determining the number of bits of the first scheduling total-number information, which will not be repeated herein to avoid repetition.

Optionally, in the single-carrier scenario, the first control information format is a first DCI format, and the first DCI format may include a C-DAI information field. Optionally, the C-DAI information field indicates an ordering of a first physical channel among physical channels scheduled by a first DCI corresponding to the first DCI format in physical channels transmitted within the HARQ feedback window (in other words, the total number of physical channels until the first physical channel among the physical channels scheduled by the first DCI within the HARQ feedback window), or indicates an ordering of a last physical channel among the physical channels scheduled by the first DCI in the physical channels transmitted within the HARQ feedback window (in other words, the total number of physical channels until the last physical channel among the physical channels scheduled by the first DCI within the HARQ feedback window). Optionally, the number of bits in the C-DAI information field is greater than 2.

Optionally, in the multi-carrier scenario, the first control information format is a first DCI format, and the first DCI format may include a C-DAI information field and a T-DAI information field. Optionally, the C-DAI information field indicates the sequence number of a first DCI corresponding to the first DCI format in DCIs transmitted by the network device within the HARQ feedback window, the T-DAI information field indicates the total number of physical channels until the first physical channel among the physical channels scheduled by the first DCI within the HARQ feedback window or the total number of physical channels until the last physical channel among the physical channels scheduled by the first DCI within the HARQ feedback window. Optionally, the number of bits in the C-DAI information field is equal to 2, and the number of bits in the T-DAI information field is greater than 2.

Optionally, the total number of physical channels counted by the first scheduling total-number information is determined according to the order of control channel detection opportunities, which is, for example, consistent with an ordering manner of PDCCH detection opportunities in the related art.

Optionally, the total number of physical channels counted by the first scheduling total-number information is determined according to a slot where the last physical channel among the S physical channels scheduled by the first control information is located.

Optionally, the total number of physical channels counted by the first scheduling total-number information is determined according to a slot where the first physical channel among the S physical channels scheduled by the first control information is located.

In some implementations of the disclosure, a value of M is configured by the second device or a network device, the value of M is determined according to a higher-layer parameter configured by the second device or the network device, or the value of M is predefined.

In other words, the maximum number of physical channels that can be scheduled by one control information is configured by the second device or the network device, or the maximum number of physical channels that can be scheduled by one control information is predefined. For example, the first control information format corresponds to a first time domain resource assignment (TDRA) table, and the maximum number of schedulable physical channels included in the first TDRA table is M.

In some implementations of the disclosure, an interpretation manner of an information field in the first control information is determined according to a higher-layer parameter configured by a network device, or the interpretation manner of the information field in the first control information is predefined, or the interpretation manner of the information field in the first control information is associated with the first control information format, or the interpretation manner of the information field in the first control information is associated with a maximum number of physical channels scheduled by the first control information.

For example, the first control information corresponds to the first control information format, and the maximum number of transmissions of physical channels scheduled by the first control information format is M, where M is a positive integer greater than or equal to 2. In this case, the interpretation manner of the information field in the first control information can be determined according to implementations of the disclosure. Alternatively, the first control information corresponds to a second control information format, and the maximum number of transmissions of physical channels scheduled by the second control information format is 1. In this case, the interpretation manner of the information field in the first control information can be determined according to the related art.

In some implementations of the disclosure, a time domain position of the first feedback resource is determined according to a first value in a HARQ feedback timing set, where the HARQ feedback timing set includes at least two values and HARQ feedback timing indication information contained in the first control information indicates the first value, or the HARQ feedback timing set only includes the first value and the HARQ feedback timing indication information is not contained in the first control information.

In other words, the time domain position of the first feedback resource is determined according to the HARQ feedback timing indication information in the first control information, where the HARQ feedback timing indication information indicates a value in the HARQ feedback timing set. Alternatively, the time domain position of the first feedback resource is determined according to the HARQ feedback timing set, where the first control information does not contain the HARQ feedback timing indication information and/or the first control information only includes one value.

Optionally, the HARQ feedback timing set is configured by a higher-layer parameter, or the HARQ feedback timing set is predefined.

Optionally, the value of K1 in the HARQ feedback timing set is associated with the value of M, or the value of K1 in the HARQ feedback timing set is determined according to the value of M. For example, when configuring values in the HARQ feedback timing set via the higher-layer parameter, the network device also needs to consider the value of M.

Optionally, the HARQ feedback timing set includes at least one value of K1. If the HARQ feedback timing set only includes one value of K1, the DCI may not contain the HARQ feedback timing indication information, and the time domain position of the HARQ feedback resource is determined according to the value of K1 in the HARQ feedback timing set. If the HARQ feedback timing set includes multiple values of K1, the number of bits of the HARQ feedback timing indication information in the DCI is determined according to the number of values of K1 in the HARQ feedback timing set.

Optionally, the first value is K1 (that is, the HARQ feedback timing indication information in the first control information indicates the K1 in the HARQ feedback timing set, or the HARQ feedback timing set only includes one value of K1 and the first control information does not contain the HARQ feedback timing indication information), K1 is greater than or equal to 0, and a slot where the first feedback resource is located is determined based on one of: an end of a last physical channel among the S physical channels is in slot n, and the first feedback resource is located in slot n+K1; an end of a first physical channel among the S physical channels is in slot n, and the first feedback resource is located in slot n+K1; and an end of the first control information is in slot n, and the first feedback resource is located in slot n+K1.

Optionally, the first value is K1, K1 is greater than or equal to 0, and a slot where the first feedback resource is located is determined based on one of: an end of a last physical channel among the S physical channels is in slot n, and the first feedback resource is located in slot n+K1; an end of a first physical channel among the S physical channels is in slot n, and the first feedback resource is located in slot n+K1; an end of the first control information is in slot n, and the first feedback resource is located in slot n+K1; an end of a first-type physical channel among the S physical channels is in slot n, and the first feedback resource is located in slot n+K1, where the first-type physical channel includes a physical channel whose time interval with respect to the first feedback resource satisfies a processing timing; an end of a second-type physical channel among the S physical channels is in slot n, and the first feedback resource is located in slot n+K1, where the second-type physical channel is a last one of physical channels among the S physical channels whose time interval with respect to the first feedback resource satisfies the processing timing; the S physical channels include at least two physical channels, the at least two physical channels are used to transmit the same TB, an end of the last physical channel among the at least two physical channels is in slot n, and the first feedback resource is located in slot n+K1; or the S physical channels include at least two physical channels, the at least two physical channels are used to transmit different TBs, an end of the last physical channel among the at least two physical channels is in slot n, and the first feedback resource is located in slot n+K1.

For example, the network device schedules transmission of four PDSCHs with DCI 0, and the four PDSCHs include PDSCH 0, PDSCH 1, PDSCH 2, and PDSCH 3. DCI 0 and PDSCH 0 are in slot n, PDSCH 1 is in slot n+1, PDSCH 2 is in slot n+2, and PDSCH 3 is in slot n+3. The HARQ feedback timing indication information in DCI 0 indicates "5" included in the HARQ feedback timing set, that is, K1=5. Decoding results of PDSCH 0, PDSCH 1, PDSCH 2, and PDSCH 3 correspond to the first HARQ-ACK codebook, and the first HARQ-ACK codebook corresponds to the first feedback resource.

In some optional implementations, the end of the last physical channel among the four physical channels scheduled by DCI 0 is in slot n+3, based on which the terminal device determines that the first feedback resource is located in slot n+8.

In some optional implementations, the end of the first physical channel among the four physical channels scheduled by DCI 0 is in slot n, based on which the terminal device determines that the first feedback resource is located in slot n+5.

In some optional implementations, the end of DCI 0 is in slot n, based on which the terminal device determines that the first feedback resource is located in slot n+5.

In some implementations of the disclosure, at least two physical channels among the M physical channels correspond to different TBs, or at least two physical channels among the S physical channels correspond to different TBs when S is greater than or equal to 2.

In some implementations of the disclosure, the first device includes a terminal device, and the second device includes a network device; or the first device includes a first terminal device, and the second device includes a second terminal device.

Preferable implementations of the disclosure have been described in detail above with reference to the accompanying drawings. However, the disclosure is not limited to the details described in the foregoing implementations. Within the scope of the technical concept of the disclosure, various simple modifications can be made to the technical solutions of the disclosure, and these simple modifications all falls within the protection scope of the disclosure. For example, various technical features described in the foregoing implementations may be combined in any suitable manner without contradiction, and in order to avoid unnecessary redundancy, various possible combinations are not further described in the disclosure. For another example, various implementations of the disclosure may also be combined in any manner, and as long as the combinations do not depart from the idea of the disclosure, they should also be considered as contents disclosed in the disclosure. For another example, implementations in the disclosure and/or technical features in various implementations may be combined with the related art in any suitable manner without conflict, and technical solutions obtained through combination should also fall within the protection scope of the disclosure.

It should also be understood that, in various method implementations of the disclosure, the magnitude of a sequence number of each of the foregoing processes does not mean an execution order, and an execution order of each process should be determined according to a function and an internal logic of the process, which shall not constitute any limitation to an implementation process of implementations of the disclosure. In addition, in implementations of the disclosure, the terms "DL" and "UL" indicate a transmission direction of a signal or data, where "DL" indicates that a transmission direction of a signal or data is a first direction from a station to a LTE in a cell, and "UL" indicates that a transmission direction of a signal or data is a second direction from a LTE in a cell to a station. For example, a "DL signal" indicates that a transmission direction of the signal is the first direction. Furthermore, in implementations of the disclosure, the term "and/or" herein only describes an association relationship between associated objects, which means that there can be three relationships. Specifically, A and/or B can mean A alone, both A and B exist, and B alone. Besides, the character "/" herein generally indicates that the associated objects are in an "or" relationship.

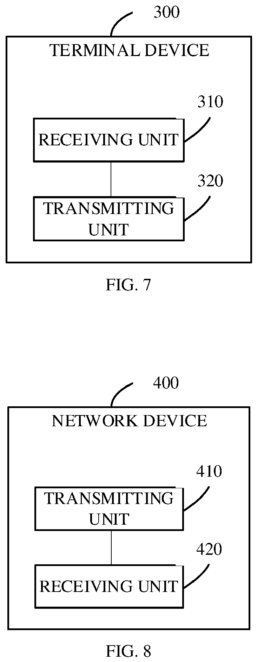

Apparatus implementations of the disclosure will be described in detail below with reference to FIGs. 7 to 10.

FIG. 7 is a schematic block diagram of a first device 300 according to implementations of the disclosure.

As illustrated in FIG. 7, the first device 300 may include a receiving unit 310 and a transmitting unit 320. The receiving unit 310 is configured to receive first control information transmitted by a second device, where the first control information is for scheduling transmission of S physical channels, at least one physical channel among the S physical channels corresponds to a first HARQ-ACK codebook, the first HARQ-ACK codebook corresponds to a first feedback resource, the first control information corresponds to a first control information format, a maximum number of transmissions of physical channels scheduled by the first control information format is M, M is a positive integer greater than or equal to 2, and S is a positive integer greater than or equal to 1 and less than or equal to M. The transmitting unit 320 is configured to transmit the first HARQ-ACK codebook on the first feedback resource.

In some implementations of the disclosure, the first control information includes first scheduling counter information, and the first scheduling counter information indicates: an ordering of a first physical channel among the S physical channels in physical channels transmitted within a HARQ feedback window; or an ordering of a last physical channel among the S physical channels in the physical channels transmitted within the HARQ feedback window; or an ordering of the first control information in control information transmitted by the second device within the HARQ feedback window.

In some implementations of the disclosure, the first control information includes first scheduling counter information and first indication information, the first scheduling counter information indicates: an ordering of a first physical channel among the S physical channels in physical channels transmitted within a HARQ feedback window; or an ordering of a last physical channel among the S physical channels in the physical channels transmitted within the HARQ feedback window, and the first indication information indicates an ordering of the first control information in control information transmitted by the second device within the HARQ feedback window.

In some implementations of the disclosure, the first control information includes first scheduling total-number information, and the first scheduling total-number information indicates: a total number of physical channels transmitted until a first physical channel among the S physical channels within a HARQ feedback window; or a total number of physical channels transmitted until a last physical channel among the S physical channels within the HARQ feedback window.

In some implementations of the disclosure, the first control information includes first scheduling counter information and first scheduling total-number information, and the first scheduling counter information and the first scheduling total-number information jointly indicate: a total number of physical channels transmitted until a first physical channel among the S physical channels within a HARQ feedback window; or a total number of physical channels transmitted until a last physical channel among the S physical channels within the HARQ feedback window.

In some implementations of the disclosure, the first control information includes first group ID indication information, and the first group ID indication information indicates a first group, where all physical channels among the S physical channels correspond to the first group, or at least one physical channel among the S physical channels corresponds to the first group.

In some implementations of the disclosure, the first control information further includes first scheduling counter information, and the first scheduling counter information indicates: an ordering of a first physical channel among the S physical channels in physical channels corresponding to the first group transmitted within a HARQ feedback window; or an ordering of a last physical channel among the S physical channels in the physical channels corresponding to the first group transmitted within the HARQ feedback window; or an ordering of the first control information in control information corresponding to the first group transmitted by the second device within the HARQ feedback window.

In some implementations of the disclosure, the first control information further includes first scheduling counter information and first indication information, the first scheduling counter information indicates: an ordering of a first physical channel among the S physical channels in physical channels corresponding to the first group transmitted within a HARQ feedback window; or an ordering of a last physical channel among the S physical channels in the physical channels corresponding to the first group transmitted within the HARQ feedback window, and the first indication information indicates an ordering of the first control information in control information corresponding to the first group transmitted by the second device within the HARQ feedback window.

In some implementations of the disclosure, the first control information further includes first scheduling total-number information, and the first scheduling total-number information indicates: a total number of physical channels corresponding to the first group transmitted until a first physical channel among the S physical channels within a HARQ feedback window; or a total number of physical channels corresponding to the first group transmitted until a last physical channel among the S physical channels within the HARQ feedback window.

In some implementations of the disclosure, the first control information further includes second scheduling total-number information, the second scheduling total-number information indicates a total number of physical channels corresponding to a second group transmitted until the first control information within a HARQ feedback window, and the second group is different from the first group.

In some implementations of the disclosure, the first control information includes first scheduling counter information and first scheduling total-number information, and the first scheduling counter information and the first scheduling total-number information jointly indicate: a total number of physical channels corresponding to the first group transmitted until a first physical channel among the S physical channels within a HARQ feedback window; or a total number of physical channels corresponding to the first group transmitted until a last physical channel among the S physical channels within the HARQ feedback window.

In some implementations of the disclosure, the first scheduling counter information includes C-DAI information and/or C-SAI information.

In some implementations of the disclosure, a number of bits of the first scheduling counter information is greater than or equal to 2.

In some implementations of the disclosure, a number of bits of the first scheduling counter information is determined according to a value of M, and/or the number of bits of the first scheduling counter information is greater than or equal to ceil(log2(M)), where log2 represents a base-2 logarithm, and ceil represents rounding up.

In some implementations of the disclosure, a number of bits of the first scheduling counter information is determined according to a value of M and a maximum number P of consecutive losses of control information that the first device can tolerant, and/or the number of bits of the first scheduling counter information is equal to ceil(log2(P*M)), where log2 represents a base-2 logarithm, and ceil represents rounding up.

In some implementations of the disclosure, the first scheduling total-number information includes T-DAI information and/or T-SAI information.

In some implementations of the disclosure, a number of bits of the first scheduling total-number information is greater than or equal to 2.

In some implementations of the disclosure, a number of bits of the first scheduling total-number information is determined according to a value of M, and/or the number of bits of the first scheduling total-number information is greater than or equal to ceil(log2(M)), where log2 represents a base-2 logarithm, and ceil represents rounding up.

In some implementations of the disclosure, a number of bits of the first scheduling total-number information is determined according to a value of M and a maximum number P of consecutive losses of control information that the first device can tolerant, and/or the number of bits of the first scheduling total-number information is equal to ceil(log2(P*M)), where log2 represents a base-2 logarithm, and ceil represents rounding up.

In some implementations of the disclosure, a value of M is configured by the second device or a network device, the value of M is determined according to a higher-layer parameter configured by the second device or the network device, or the value of M is predefined.

In some implementations of the disclosure, an interpretation manner of an information field in the first control information is determined according to a higher-layer parameter configured by a network device, or the interpretation manner of the information field in the first control information is predefined, or the interpretation manner of the information field in the first control information is associated with the first control information format, or the interpretation manner of the information field in the first control information is associated with a maximum number of physical channels scheduled by the first control information.

In some implementations of the disclosure, the at least one physical channel among the S physical channels includes all physical channels among the S physical channels, or the at least one physical channel among the S physical channels includes a first physical channel among the S physical channels, where a time interval between the first physical channel and the first feedback resource satisfies a processing timing.

In some implementations of the disclosure, the time interval between the first physical channel and the first feedback resource satisfying the processing timing includes: a time interval between an end of the first physical channel and a start of the first feedback resource satisfying the processing timing, or the time interval between the end of the first physical channel and the start of the first feedback resource being greater than or equal to a predefined value.

In some implementations of the disclosure, a time domain position of the first feedback resource is determined according to a first value in a HARQ feedback timing set, where the HARQ feedback timing set includes at least two values and HARQ feedback timing indication information contained in the first control information indicates the first value; or the HARQ feedback timing set only includes the first value and the HARQ feedback timing indication information is not contained in the first control information.

In some implementations of the disclosure, the first value is K1, K1 is greater than or equal to 0, and a slot where the first feedback resource is located is determined based on one of: an end of a last physical channel among the S physical channels is in slot n, and the first feedback resource is located in slot n+K1; an end of a first physical channel among the S physical channels is in slot n, and the first feedback resource is located in slot n+K1; and an end of the first control information is in slot n, and the first feedback resource is located in slot n+K1.

In some implementations of the disclosure, at least two physical channels among the M physical channels correspond to different TB; or at least two physical channels among the S physical channels correspond to different TBs when S is greater than or equal to 2.

In some implementations of the disclosure, the first device includes a terminal device, and the second device includes a network device; or the first device includes a first terminal device, and the second device includes a second terminal device.

FIG. 8 is a schematic block diagram of a second device 400 according to implementations of the disclosure.

As illustrated in FIG. 8, the second device 400 may include a transmitting unit 410 and a receiving unit 420. The transmitting unit 410 is configured to transmit first control information to a first device, where the first control information is for scheduling transmission of S physical channels, at least one physical channel among the S physical channels corresponds to a first HARQ-ACK codebook, the first HARQ-ACK codebook corresponds to a first feedback resource, the first control information corresponds to a first control information format, a maximum number of transmissions of physical channels scheduled by the first control information format is M, M is a positive integer greater than or equal to 2, and S is a positive integer greater than or equal to 1 and less than or equal to M. The receiving unit 420 is configured to receive the first HARQ-ACK codebook on the first feedback resource.

In some implementations of the disclosure, the first control information includes first scheduling counter information, and the first scheduling counter information indicates: an ordering of a first physical channel among the S physical channels in physical channels transmitted within a HARQ feedback window; or an ordering of a last physical channel among the S physical channels in the physical channels transmitted within the HARQ feedback window; or an ordering of the first control information in control information transmitted by the second device within the HARQ feedback window.

In some implementations of the disclosure, the first control information includes first scheduling counter information and first indication information, the first scheduling counter information indicates: an ordering of a first physical channel among the S physical channels in physical channels transmitted within a HARQ feedback window; or an ordering of a last physical channel among the S physical channels in the physical channels transmitted within the HARQ feedback window, and the first indication information indicates an ordering of the first control information in control information transmitted by the second device within the HARQ feedback window.

In some implementations of the disclosure, the first control information includes first scheduling total-number information, and the first scheduling total-number information indicates: a total number of physical channels transmitted until a first physical channel among the S physical channels within a HARQ feedback window; or a total number of physical channels transmitted until a last physical channel among the S physical channels within the HARQ feedback window.

In some implementations of the disclosure, the first control information includes first scheduling counter information and first scheduling total-number information, and the first scheduling counter information and the first scheduling total-number information jointly indicate: a total number of physical channels transmitted until a first physical channel among the S physical channels within a HARQ feedback window; or a total number of physical channels transmitted until a last physical channel among the S physical channels within the HARQ feedback window.

In some implementations of the disclosure, the first control information includes first group ID indication information, and the first group ID indication information indicates a first group, where all physical channels among the S physical channels correspond to the first group, or at least one physical channel among the S physical channels corresponds to the first group.

In some implementations of the disclosure, the first control information further includes first scheduling counter information, and the first scheduling counter information indicates: an ordering of a first physical channel among the S physical channels in physical channels corresponding to the first group transmitted within a HARQ feedback window; or an ordering of a last physical channel among the S physical channels in the physical channels corresponding to the first group transmitted within the HARQ feedback window; or an ordering of the first control information in control information corresponding to the first group transmitted by the second device within the HARQ feedback window.

In some implementations of the disclosure, the first control information includes first scheduling counter information and first indication information, the first scheduling counter information indicates: an ordering of a first physical channel among the S physical channels in physical channels corresponding to the first group transmitted within a HARQ feedback window; or an ordering of a last physical channel among the S physical channels in the physical channels corresponding to the first group transmitted within the HARQ feedback window, and the first indication information indicates an ordering of the first control information in control information corresponding to the first group transmitted by the second device within the HARQ feedback window.

In some implementations of the disclosure, the first control information includes first scheduling total-number information, and the first scheduling total-number information indicates: a total number of physical channels corresponding to the first group transmitted until a first physical channel among the S physical channels within a HARQ feedback window; or a total number of physical channels corresponding to the first group transmitted until a last physical channel among the S physical channels within the HARQ feedback window.

In some implementations of the disclosure, the first control information includes second scheduling total-number information, the second scheduling total-number information indicates a total number of physical channels corresponding to a second group transmitted until the first control information within a HARQ feedback window, and the second group is different from the first group.

In some implementations of the disclosure, the first control information includes first scheduling counter information and first scheduling total-number information, and the first scheduling counter information and the first scheduling total-number information jointly indicate: a total number of physical channels corresponding to the first group transmitted until a first physical channel among the S physical channels within a HARQ feedback window; or a total number of physical channels corresponding to the first group transmitted until a last physical channel among the S physical channels within the HARQ feedback window.

In some implementations of the disclosure, the first scheduling counter information includes C-DAI information and/or C-SAI information.

In some implementations of the disclosure, a number of bits of the first scheduling counter information is greater than or equal to 2.

In some implementations of the disclosure, a number of bits of the first scheduling counter information is determined according to a value of M, and/or the number of bits of the first scheduling counter information is greater than or equal to ceil(log2(M)), where log2 represents a base-2 logarithm, and ceil represents rounding up.

In some implementations of the disclosure, a number of bits of the first scheduling counter information is determined according to a value of M and a maximum number P of consecutive losses of control information that the first device can tolerant, and/or the number of bits of the first scheduling counter information is equal to ceil(log2(P*M)), where log2 represents a base-2 logarithm, and ceil represents rounding up.

In some implementations of the disclosure, the first scheduling total-number information includes T-DAI information and/or T-SAI information.

In some implementations of the disclosure, a number of bits of the first scheduling total-number information is greater than or equal to 2.

In some implementations of the disclosure, a number of bits of the first scheduling total-number information is determined according to a value of M, and/or the number of bits of the first scheduling total-number information is greater than or equal to ceil(log2(M)), where log2 represents a base-2 logarithm, and ceil represents rounding up.

In some implementations of the disclosure, a number of bits of the first scheduling total-number information is determined according to a value of M and a maximum number P of consecutive losses of control information that the first device can tolerant, and/or the number of bits of the first scheduling total-number information is equal to ceil(log2(P*M)), where log2 represents a base-2 logarithm, and ceil represents rounding up.

In some implementations of the disclosure, a value of M is configured by the second device or a network device, the value of M is determined according to a higher-layer parameter configured by the second device or the network device, or the value of M is predefined.

In some implementations of the disclosure, an interpretation manner of an information field in the first control information is determined according to a higher-layer parameter configured by a network device, or the interpretation manner of the information field in the first control information is predefined, or the interpretation manner of the information field in the first control information is associated with the first control information format, or the interpretation manner of the information field in the first control information is associated with a maximum number of physical channels scheduled by the first control information.

In some implementations of the disclosure, the at least one physical channel among the S physical channels includes all physical channels among the S physical channels, or the at least one physical channel among the S physical channels includes a first physical channel among the S physical channels, where a time interval between the first physical channel and the first feedback resource satisfies a processing timing.

In some implementations of the disclosure, the time interval between the first physical channel and the first feedback resource satisfying the processing timing includes: a time interval between an end of the first physical channel and a start of the first feedback resource satisfying the processing timing, or the time interval between the end of the first physical channel and the start of the first feedback resource being greater than or equal to a predefined value.

In some implementations of the disclosure, a time domain position of the first feedback resource is determined according to a first value in a HARQ feedback timing set, where the HARQ feedback timing set includes at least two values and HARQ feedback timing indication information contained in the first control information indicates the first value; or the HARQ feedback timing set only includes the first value and the HARQ feedback timing indication information is not contained in the first control information.

In some implementations of the disclosure, the first value is K1, K1 is greater than or equal to 0, and a slot where the first feedback resource is located is determined based on one of: an end of a last physical channel among the S physical channels is in slot n, and the first feedback resource is located in slot n+K1; an end of a first physical channel among the S physical channels is in slot n, and the first feedback resource is located in slot n+K1; and an end of the first control information is in slot n, and the first feedback resource is located in slot n+K1.

In some implementations of the disclosure, at least two physical channels among the M physical channels correspond to different TB; or at least two physical channels among the S physical channels correspond to different TBs when S is greater than or equal to 2.

In some implementations of the disclosure, the first device includes a terminal device, and the second device includes a network device; or the first device includes a first terminal device, and the second device includes a second terminal device.

It should be understood that, apparatus implementations and method implementations correspond to each other. For similar elaborations, reference can be made to the method implementations. Specifically, the first device 300 illustrated in FIG. 7 may correspond to a corresponding entity for implementing the method 200 in implementations of the disclosure, and the above and other operations and/or functions of various units of the first device 300 are respectively intended for implementing corresponding operations in the method illustrated in FIG. 2, and similarly, the second device 400 illustrated in FIG. 8 may correspond to a corresponding entity for implementing the method 200 in implementations of the disclosure, and the above and other operations and/or functions of various units of the second device 400 are respectively intended for implementing corresponding operations in the method illustrated in FIG. 2, which will not be repeated herein for the sake of simplicity.

The communication device in implementations of the disclosure has been described above from the perspective of functional modules with reference to the accompanying drawings. It should be understood that, the functional module may be implemented by the form of hardware, or may be implemented by an instruction in the form of software, or may be implemented by a combination of hardware and software module.

Specifically, each step of the method implementations of the disclosure may be completed by an integrated logic circuit of hardware in a processor and/or an instruction in the form of software. The steps of the method disclosed in implementations of the disclosure may be directly implemented by a hardware decoding processor, or may be performed by hardware and software modules in the decoding processor.

Optionally, the software module can be located in a storage medium such as a random access memory (RAM), a flash memory, a read only memory (ROM), a programmable ROM (PROM), or an electrically erasable programmable memory, registers, and the like. The storage medium is located in a memory. The processor reads the information in the memory, and completes the steps of the foregoing method implementations with the hardware of the processor.

For example, the processing unit described above may be implemented by the processor, and the communicating unit described above may be implemented by a transceiver.

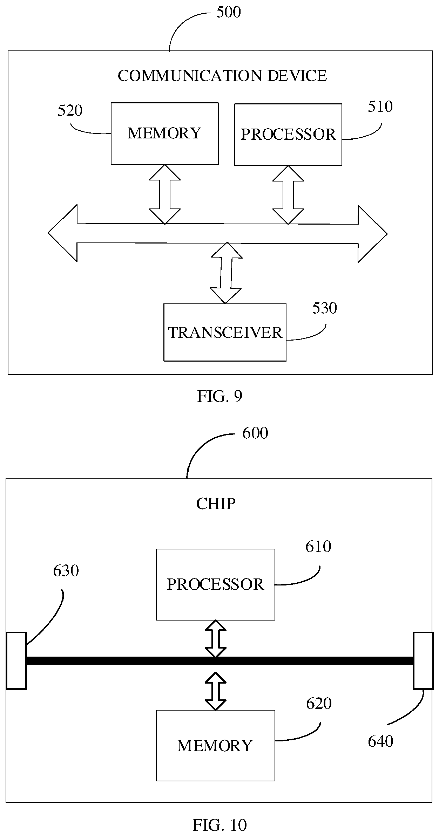

FIG. 9 is a schematic structural diagram of a communication device 500 according to implementations of the disclosure.

As illustrated in FIG. 9, the communication device 500 may include a processor 510.

The processor 510 can invoke and execute computer programs stored in a memory, to perform the method in implementations of the disclosure.

Referring to FIG. 9 again, the communication device 500 may further include the memory 520.

The memory 520 can be configured to store indication information, or store codes, instructions, etc. executable by the processor 510. The processor 510 can invoke and execute the computer programs stored in the memory 520, to perform the method in implementations of the disclosure. The memory 520 may be a separate device independent of the processor 510, or may be integrated into the processor 510.

Referring to FIG. 9 again, the communication device 500 can further include a transceiver 530.

The processor 510 can control the transceiver 530 to communicate with other devices, specifically, to transmit information or data to other devices or to receive information or data transmitted by other devices. The transceiver 530 may include a transmitter and a receiver. The transceiver 530 may further include an antenna, where one or more antennas can be provided.

It should be understood that, various components in the communication device 500 are connected together via a bus system. In addition to a data bus, the bus system may further include a power bus, a control bus, and a status signal bus.

It should also be understood that, the communication device 500 may be operable as the first device in implementations of the disclosure, and the communication device 500 can implement the operations performed by the first device in various methods in implementations of the disclosure. In other words, the communication device 500 in implementations of the disclosure can correspond to the first device 300 in implementations of the disclosure, and can correspond to a corresponding entity for implementing the method according to implementations of the disclosure, where the transceiver 503 can correspondingly implement the operations and/or functions implemented by the receiving unit 310 and the transmitting unit 320 in the first device 300 in this case, which will not be repeated herein for the sake of simplicity. Similarly, the communication device 500 may be operable as the second device in implementations of the disclosure, and the communication device 500 can implement the operations performed by the network device in various methods in implementations of the disclosure. In other words, the communication device 500 in implementations of the disclosure can correspond to the second device 400 in implementations of the disclosure, and can correspond to a corresponding entity for implementing the method according to implementations of the disclosure, where the transceiver 530 can correspondingly implement the operations and/or functions implemented by the transmitting unit 410 and the receiving unit 420 in the second device 400 in this case, which will not be repeated herein for the sake of simplicity.

In addition, implementations of the disclosure further provide a chip.

For example, the chip may be an integrated circuit chip with signal processing capabilities, which can implement or execute various methods, steps, or logic blocks disclosed in implementations of the disclosure. The chip may also be referred to as a system-on-chip (SOC). Optionally, the chip is applicable to various communication devices, to cause a communication device equipped with the chip to perform various methods, steps, or logic blocks disclosed in implementations of the disclosure.

FIG. 10 is a schematic structural diagram of a chip 600 according to implementations of the disclosure.

As illustrated in FIG. 10, the chip 600 includes a processor 610.

The processor 610 can invoke and execute computer programs stored in a memory to perform the method in implementations of the disclosure.

Referring to FIG. 10 again, the chip 600 further includes the memory 620.

The processor 610 can invoke and execute the computer programs stored in the memory 620 to perform the method in implementations of the disclosure. The memory 620 can be configured to store indication information, or store codes, instructions, etc. executable by the processor 610. The memory 620 may be a separate device independent of the processor 610, or may be integrated into the processor 610.

Referring to FIG. 10 again, the chip 600 may further include an input interface 630.

The processor 610 can control the input interface 630 to communicate with other devices or chips, specifically, to obtain information or data transmitted by other devices or chips.

Referring to FIG. 10 again, the chip 600 may further include an output interface 640.

The processor 610 can control the output interface 640 to communicate with other devices or chips, specifically, to output information or data to other devices or chips.

It should be understood that, the chip 600 is applicable to the network device in implementations of the disclosure. The chip can implement the operations performed by the network device in various methods in implementations of the disclosure, and can also implement the operations performed by the terminal device in various methods in implementations in the disclosure, which will not be repeated herein for the sake of simplicity.

It should be also understood that, various components in the chip 600 are connected together via a bus system. In addition to a data bus, the bus system may further include a power bus, a control bus, and a status signal bus.

The processor described above may include but is not limited to a general-purpose processor, a digital signal processor (DSP), an application specific integrated circuit (ASIC), a field programmable gate array (FPGA), or other programmable logic devices, discrete gates or transistor logic devices, discrete hardware components, etc.

The processor can be configured to perform or execute the methods, steps, and logic blocks disclosed in implementations of the disclosure can be implemented or executed. The steps of the method disclosed in implementations of the disclosure may be directly implemented by a hardware decoding processor, or may be performed by hardware and software modules in the decoding processor. The software module can be located in a storage medium such as a RAM, a flash memory, a ROM, a PROM, or an erasable programmable memory, registers, and the like. The storage medium is located in the memory. The processor reads the information in the memory, and completes the steps of the method described above with the hardware of the processor.

The memory described above may include but is not limited to a volatile memory and/or a non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

It should be noted that, the memory described in the disclosure is intended to include, but is not limited to, these and any other suitable types of memory.

Implementations of the disclosure further provide a computer-readable storage medium. The computer-readable storage medium is configured to store computer programs. The computer-readable storage medium stores one or more programs. The one or more programs include instructions which, when executed by a portable electronic device including multiple application programs, are operable with the portable electronic device to perform implementations in the method.

Optionally, the computer-readable storage medium is applicable to the first device of implementations of the disclosure. The computer programs are operable with a computer to implement the operations performed by the first device in various methods in implementations of the disclosure, which will not be repeated herein for the sake of simplicity.

Optionally, the computer-readable storage medium is applicable to the second device of implementations of the disclosure. The computer programs are operable with a computer to implement the operations performed by the second device in various methods in implementations of the disclosure, which will not be repeated herein for the sake of simplicity.

Implementations of the disclosure further provide a computer program product. The computer program product includes computer programs.

Optionally, the computer program product is applicable to the first device of implementations of the disclosure. The computer programs are operable with a computer to implement the operations performed by the first device in various methods in implementations of the disclosure, which will not be repeated herein for the sake of simplicity.

Optionally, the computer program product is applicable to the second device of implementations of the disclosure. The computer programs are operable with a computer to implement the operations performed by the second device in various methods in implementations of the disclosure, which will not be repeated herein for the sake of simplicity.

Implementations of the disclosure further provide a computer program. The computer program, when executed by a computer, is operable with the computer to perform implementations in the method.

Optionally, the computer program is applicable to the first device of implementations of the disclosure. The computer program, when executed by a computer, is operable with the computer to implement the operations performed by the first device in various methods in implementations of the disclosure, which will not be repeated herein for the sake of simplicity. Optionally, the computer program is applicable to the second device of implementations of the disclosure. The computer program, when executed by a computer, is operable with the computer to implement the operations performed by the second device in various methods in implementations of the disclosure, which will not be repeated herein for the sake of simplicity.

In addition, implementations of the disclosure further provide a communication system. The communication system may include the first device and the second device described above, to constitute the communication system illustrated in FIG. 1, which will not be repeated herein for the sake of simplicity. It is to be noted that, the term "system" or the like in the disclosure may also be referred to as "network management architecture" or "network architecture", etc.

It should be also understood that, the terms used in implementations of the disclosure and the appended claims are merely intended for describing the implementations, rather than limiting implementations of the disclosure.

For example, the singular form "a/an", "said", "above", and "the" used in implementations of the disclosure and the appended claims are also intended to include multiple forms, unless specified otherwise in the context.

Those of ordinary skill in the art will appreciate that units and algorithmic operations of various examples described in connection with implementations of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computing device, e.g., a personal computer, a server, a network device, etc., to execute some or all operations of the methods described in various implementations of the disclosure. The above storage medium may include various kinds of media that can store program codes, such as a universal serial bus (USB) flash disk, a mobile hard drive, a ROM, a RAM, a magnetic disk, or an optical disk.

It will be evident to those skilled in the art that, for the sake of convenience and simplicity, in terms of the specific working processes of the foregoing systems, apparatuses, and units, reference can be made to the corresponding processes in the foregoing method implementations, which will not be repeated herein.

It will be appreciated that the systems, apparatuses, and methods disclosed in implementations of the disclosure may also be implemented in various other manners.

For example, the division of units, modules, or assemblies in the foregoing apparatus implementations is only a division of logical functions, and there may be other manners of division available in practice, e.g., multiple units, modules, or assemblies may be combined or may be integrated into another system, or some features may be ignored or skipped.

Separated units/modules/assemblies as illustrated may or may not be physically separated, that is, may reside at one location or may be distributed to multiple networked units. Some or all of the units/modules/assemblies may be selectively adopted according to practical needs to achieve desired objectives of the disclosure.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A wireless communication method, comprising:
receiving, by a first device, first control information transmitted by a second device, the first control information being for scheduling transmission of S physical channels, at least one physical channel among the S physical channels corresponding to a first hybrid automatic repeat request (HARQ)-acknowledgment (ACK) codebook, the first HARQ-ACK codebook corresponding to a first feedback resource, the first control information corresponding to a first control information format, a maximum number of transmissions of physical channels scheduled by the first control information format being M, M being a positive integer greater than or equal to 2, and S being a positive integer greater than or equal to 1 and less than or equal to M; and
transmitting, by the first device, the first HARQ-ACK codebook on the first feedback resource.

2. The method of claim 1, wherein the first control information comprises first scheduling counter information, and the first scheduling counter information indicates:
an ordering of a first physical channel among the S physical channels in physical channels transmitted within a HARQ feedback window; or
an ordering of a last physical channel among the S physical channels in the physical channels transmitted within the HARQ feedback window; or
an ordering of the first control information in control information transmitted by the second device within the HARQ feedback window.

3. The method of claim 1, wherein the first control information comprises first scheduling counter information and first indication information, the first scheduling counter information indicates:
an ordering of a first physical channel among the S physical channels in physical channels transmitted within a HARQ feedback window; or
an ordering of a last physical channel among the S physical channels in the physical channels transmitted within the HARQ feedback window, and
the first indication information indicates an ordering of the first control information in control information transmitted by the second device within the HARQ feedback window.

4. The method of any of claims 1 to 3, wherein the first control information comprises first scheduling total-number information, and the first scheduling total-number information indicates:
a total number of physical channels transmitted until a first physical channel among the S physical channels within a HARQ feedback window; or
a total number of physical channels transmitted until a last physical channel among the S physical channels within the HARQ feedback window.

5. The method of claim 1, wherein the first control information comprises first scheduling counter information and first scheduling total-number information, and the first scheduling counter information and the first scheduling total-number information jointly indicate:
a total number of physical channels transmitted until a first physical channel among the S physical channels within a HARQ feedback window; or
a total number of physical channels transmitted until a last physical channel among the S physical channels within the HARQ feedback window.

6. The method of claim 1, wherein the first control information comprises first group identifier (ID) indication information, and the first group ID indication information indicates a first group, wherein all physical channels among the S physical channels correspond to the first group, or at least one physical channel among the S physical channels corresponds to the first group.

7. The method of claim 6, wherein the first control information further comprises first scheduling counter information, and the first scheduling counter information indicates:
an ordering of a first physical channel among the S physical channels in physical channels corresponding to the first group transmitted within a HARQ feedback window; or
an ordering of a last physical channel among the S physical channels in the physical channels corresponding to the first group transmitted within the HARQ feedback window; or
an ordering of the first control information in control information corresponding to the first group transmitted by the second device within the HARQ feedback window.

8. The method of claim 6, wherein the first control information further comprises first scheduling counter information and first indication information, the first scheduling counter information indicates:
an ordering of a first physical channel among the S physical channels in physical channels corresponding to the first group transmitted within a HARQ feedback window; or
an ordering of a last physical channel among the S physical channels in the physical channels corresponding to the first group transmitted within the HARQ feedback window, and
the first indication information indicates an ordering of the first control information in control information corresponding to the first group transmitted by the second device within the HARQ feedback window.

9. The method of any of claims 6 to 8, wherein the first control information further comprises first scheduling total-number information, and the first scheduling total-number information indicates:
a total number of physical channels corresponding to the first group transmitted until a first physical channel among the S physical channels within a HARQ feedback window; or
a total number of physical channels corresponding to the first group transmitted until a last physical channel among the S physical channels within the HARQ feedback window.

10. The method of any of claims 6 to 9, wherein the first control information further comprises second scheduling total-number information, the second scheduling total-number information indicates a total number of physical channels corresponding to a second group transmitted until the first control information within a HARQ feedback window, and the second group is different from the first group.

11. The method of claim 6, wherein the first control information further comprises first scheduling counter information and first scheduling total-number information, and the first scheduling counter information and the first scheduling total-number information jointly indicate:
a total number of physical channels corresponding to the first group transmitted until a first physical channel among the S physical channels within a HARQ feedback window; or
a total number of physical channels corresponding to the first group transmitted until a last physical channel among the S physical channels within the HARQ feedback window.

12. The method of any of claims 2, 3, 5, 7, 8, and 11, wherein the first scheduling counter information comprises counter downlink assignment index (C-DAI) information and/or counter sidelink assignment index (C-SAI) information.

13. The method of any of claims 2, 3, 5, 7, 8, 11, and 12, wherein a number of bits of the first scheduling counter information is greater than or equal to 2.

14. The method of any of claims 2, 3, 5, 7, 8, and 11 to 13, wherein a number of bits of the first scheduling counter information is determined according to a value of M, and/or the number of bits of the first scheduling counter information is greater than or equal to ceil(log2(M)), wherein log2 represents a base-2 logarithm, and ceil represents rounding up.

15. The method of any of claims 2, 3, 5, 7, 8, and 11 to 14, wherein a number of bits of the first scheduling counter information is determined according to a value of M and a maximum number P of consecutive losses of control information that the first device can tolerant, and/or the number of bits of the first scheduling counter information is equal to ceil(log2(P*M)), wherein log2 represents a base-2 logarithm, and ceil represents rounding up.

16. The method of any of claims 4, 5, 9, and 11, wherein the first scheduling total-number information comprises total downlink assignment index (T-DAI) information and/or total sidelink assignment index (T-SAI) information.

17. The method of any of claims 4, 5, 9, 11, and 16, wherein a number of bits of the first scheduling total-number information is greater than or equal to 2.

18. The method of any of claims 4, 5, 9, 11, 16, and 17, wherein a number of bits of the first scheduling total-number information is determined according to a value of M, and/or the number of bits of the first scheduling total-number information is greater than or equal to ceil(log2(M)), wherein log2 represents a base-2 logarithm, and ceil represents rounding up.

19. The method of any of claims 4, 5, 9, 11, and 16 to 18, wherein a number of bits of the first scheduling total-number information is determined according to a value of M and a maximum number P of consecutive losses of control information that the first device can tolerant, and/or the number of bits of the first scheduling total-number information is equal to ceil(log2(P*M)), wherein log2 represents a base-2 logarithm, and ceil represents rounding up.

20. The method of any of claims 1 to 19, wherein a value of M is configured by the second device or a network device, the value of M is determined according to a higher-layer parameter configured by the second device or the network device, or the value of M is predefined.

21. The method of any of claims 1 to 20, wherein an interpretation manner of an information field in the first control information is determined according to a higher-layer parameter configured by a network device, or the interpretation manner of the information field in the first control information is predefined, or the interpretation manner of the information field in the first control information is associated with the first control information format, or the interpretation manner of the information field in the first control information is associated with a maximum number of physical channels scheduled by the first control information.

22. The method of any of claims 1 to 21, wherein the at least one physical channel among the S physical channels comprises all physical channels among the S physical channels, or the at least one physical channel among the S physical channels comprises a first physical channel among the S physical channels, wherein a time interval between the first physical channel and the first feedback resource satisfies a processing timing.

23. The method of claim 22, wherein the time interval between the first physical channel and the first feedback resource satisfying the processing timing comprises: a time interval between an end of the first physical channel and a start of the first feedback resource satisfying the processing timing, or the time interval between the end of the first physical channel and the start of the first feedback resource being greater than or equal to a predefined value.

24. The method of any of claims 1 to 23, wherein a time domain position of the first feedback resource is determined according to a first value in a HARQ feedback timing set, wherein
the HARQ feedback timing set comprises at least two values and HARQ feedback timing indication information contained in the first control information indicates the first value; or
the HARQ feedback timing set only comprises the first value and the HARQ feedback timing indication information is not contained in the first control information.

25. The method of claim 24, wherein the first value is K1, K1 is greater than or equal to 0, and a slot where the first feedback resource is located is determined based on one of:
an end of a last physical channel among the S physical channels is in slot n, and the first feedback resource is located in slot n+K1;
an end of a first physical channel among the S physical channels is in slot n, and the first feedback resource is located in slot n+K1; and
an end of the first control information is in slot n, and the first feedback resource is located in slot n+K1.

26. The method of any of claims 1 to 25, wherein at least two physical channels among the M physical channels correspond to different transport blocks (TB); or
at least two physical channels among the S physical channels correspond to different TBs when S is greater than or equal to 2.

27. The method of any of claims 1 to 26, wherein the first device comprises a terminal device, and the second device comprises a network device; or
the first device comprises a first terminal device, and the second device comprises a second terminal device.

28. A wireless communication method, comprising:
transmitting, by a second device, first control information to a first device, the first control information being for scheduling transmission of S physical channels, at least one physical channel among the S physical channels corresponding to a first hybrid automatic repeat request (HARQ)-acknowledgment (ACK) codebook, the first HARQ-ACK codebook corresponding to a first feedback resource, the first control information corresponding to a first control information format, a maximum number of transmissions of physical channels scheduled by the first control information format being M, M being a positive integer greater than or equal to 2, and S being a positive integer greater than or equal to 1 and less than or equal to M; and
receiving, by the first device, the first HARQ-ACK codebook on the first feedback resource.

29. A first device, comprising:
a memory configured to store computer programs; and
a processor configured to invoke and execute the computer programs stored in the memory to perform the method of any of claims 1 to 27.

30. A second device, comprising:
a memory configured to store computer programs; and
a processor configured to invoke and execute the computer programs stored in the memory to perform the method of claim 28.

31. A chip, comprising:
a processor configured to invoke and execute computer programs stored in a memory, to cause a device equipped with the chip to perform the method of any of claims 1 to 27 or the method of claim 28.

32. A computer-readable storage medium configured to store computer programs operable with a computer to perform the method of any of claims 1 to 27 or the method of claim 28.

33. A computer program product comprising computer program instructions operable with a computer to perform the method of any of claims 1 to 27 or the method of claim 28.

34. A computer program being operable with a computer to perform the method of any of claims 1 to 27 or the method of claim 28.
